# EUROPEAN PATENT APPLICATION

(11) **EP 1 383 271 A1**
(43) Date of publication of application: **21.01.2004**
(21) Application number: 02016137.8
(22) Date of filing: 19.07.2002
(51) Int. Cl.: H04L 12/18, H04L 29/06, H04M 3/56, H04L 29/12

(54) **Communications environment comprising a telecommunications web site**

(71) Applicant: Web. De AG, 76227 Karlsruhe (DE)
(72) Inventor: Cotte, Pierre-Alain, D-92224 Amberg (DE)
(74) Representative: Schnekenbühl, Robert Matthias L.

(57) **Abstract**

The invention relates to a telecommunications web site (TCW) wherein the telecommunications web site (TCW) has an event creating element (ECE).

## Description

### Field of the invention

The invention relates to a Event Creating Element of a Telecommunications Web Site. In general, the present invention relates to communications environments for an end user unit communicating via the communications environment and related systems, devices, units and methods for communications purposes. In particular, the present invention relates to a communications environment integrating various communications systems, such as computer-based networks, the Internet, PSTN networks, UMTS networks, mobile telephone networks, radio communications systems, satellite-based communications and the like wherein all communications from and to a end user unit are executed via a general-purpose communications interface, a so-called telecommunications web site (TCW), in a direct and private manner with respect to the communicating parties.

### Background of the invention

Traditionally, in order to accomplish personalized and private communications, postal service-based communications, e.g., by letters, personally addressed to a receiving party uniquely characterized by a name and address are used. A further example, of private communications personally directed to a party are telephone network-based communications, e.g., telephone calls, facsimiles and telexes, wherein a telephone number uniquely indicate the addressee.

In view of a demand for enhanced communications, computer network-based communications, e.g., via the Internet, have partially replaced the traditional communications.

Although, computer network-based communications exhibit some benefits compared to postal service-based and telephone network-based communications, e.g., a higher transmission rates for text and graphic data, transmissions of different data formats via a common communications link and transmissions of high data amounts and loads, some of the advantages of "writing letters" and "calling a person per telephone" have been abandoned for the sake of participating in new technology communications.

In the following, an overview of different conventional communications environments is given respectively indicating advantages and disadvantages thereof:

Conventional telephone systems (PSTN, mobile telephone networks, satellite and radio-based environments) used for voice provide for point-to-point communications links allowing virtually true and simultaneous bi-directional communications and (nearly) delay-free data transmissions. Beside the actions of communicating parties to input telephone numbers, to pick up telephone hand sets, to speak and to listen and the like. Data transmissions between respective end user units (telephones) are not possible.

Further, the addressing of a party is based on worldwide valid addresses by means of telephone numbers, which uniquely identify a party. Thus, upon dialing the right telephone number, a communications link will be established to a desired party and, as a result, communications will occur only between the calling and the called party, i.e., communications will be personalized and private. However, the established communication will not necessarily be secure.

End user units for telephone communications environments are, in particular for mobile communications environments, small, light weight and not restricted to a special location, such that communications are possible wherever intended.

Thus, telephone-based communications are an easy and fast way to communicate. On the other hand telephone-based communications have limited data transmission capabilities, e.g., limited transmissions bandwidths. Therefore, for example, transmissions of video and audio data are possible in restricted extent only and multi-medial communications links are not possible at all.

A further limitation of telephone environments is their restricted capability of event-based control of communications. In telephone environments, for example, it is possible to forward an incoming call to another telephone device in general but not selectively for specific calling parties only.

Computer-based communications environments (e.g., local area networks and the Internet) employ a plurality of hardware devices (e.g., computer systems and network modems) and, in particular, a vast number of different software applications (e.g., network browsers, e-mail applications, data conversion software and encoding and decoding software). A certain level of knowledge, understanding and experience is required by users of such communications environments specifically with respect to the use of software applications. For example, computer-based communications environments are based on complex addressing methods, which require, compared to telephone-based communications, an increased amount of user interaction and knowledge.

Further, computer-based communications environments do not provide for true bi-directional communications, i.e., communications performed simultaneously and virtually in real-time. Rather, such communications are subsequently performed uni-directional data transmissions like data file exchanges, web page accesses and email-based communications.

Moreover, due to the methods employed with computer-based communications environments for actually transmitting data (e.g., asynchronous file transfer of data packets, least cost network routing strategies and utilization of different physical communications links for one communications connection), voice and video data transmissions are restricted. Further drawbacks of computer-based communications environments include security problems (e.g., data interception) and undesired data communications (e.g., "junk mail").

In computer-based communications environments, communications that can be compared with telephone-based communications in respect to personalization and privacy are based on email applications. On the other hand, email communication is, from its nature, more akin to enhanced letter writing rather than bi-directional communication, as is directly talking via telephones.

Additionally, computer-based communications environments have restricted capabilities to control communications on the basis of events. Using email applications, for example, it is only possible to forward received email messages to another party (e.g., by means of another email address) or to filter undesired email messages such that they are not actually received by the party to which they are addressed (e.g., junk mail filter).

A further example of computer-based communications are web sites and its web page(s), respectively. Web sites generally provide for uni-directional communications, in particular transmissions of data and information to end user units and its users, respectively, accessing a web site. Moreover, private communications comparable to telephone communications are not possible since web sites are accessible by anybody or accessible by a predefined group of users.

Both, telephone and computer-based communications environments are isolated from each other. Thus, separate addresses and addressing methods are employed for telephone and computer-based communications environments. As a result, communications can only be established within one environment and cannot be interconnected to another one.

### Object of the invention

In general, the object of the present invention is to overcome the disadvantages existing in known communications environments and to provide a solution incorporating, at least the main advantages offered by available communications environments. More particularly, the object of the present invention is to provide for a communications environment which allows for communications which are comparable to telephone communications in terms of privacy and ease of use and provide the data communications capabilities prevailing in any existing communications network (e.g., telephone networks, computer-based networks and the Internet).

### Short description of the invention

The above object is achieved by a communications environment, a telecommunications web site, a method, a computer program product and an end user unit according to the independent claims. Further advantageous features and embodiments are defined in the dependent claims.

[01] In particular, the object of the present invention is achieved by a communications environment comprising a first end user unit (EUU1) being adapted to perform network-based communications, and a web site including at least one web page, wherein the web site is a telecommunications web site (TCW) corresponding to a specific entity (SE), and the telecommunications web site (TCW) is adapted to provide, upon an access by the first end user unit (EUU1), for direct private communications between the first end unit and the specific entity (SE). Thus a new way of communications is disclosed where a person (SE) can be contacted via a web site providing private communications between a caller and the host of this TCW. In all Internet communication of the prior art, the parties do not communicate via a personalized web site. Even using a web site within a chat forum, this web site of the chat forum does not correspond to a specific person; rather there can be many different persons in the chat forum.

A communications environment is a communications system comprising more than one component. Thus, a communications environment or communications system might for instance comprise a telephone, a PSTN-network, a gateway to the internet, etc.

[01 - EUU] The first end user unit (EUU1) as any end user unit (EUU) is preferably a device or means, which can be used for communications. A preferred EUU is a telephone, a keyboard, a computer terminal, a mobile phone, a fax, a telex, a mail pigeon, an ordinary letter, a scanner, a PSTN device, a 3G-wireless communications device, especially a UMTS device, etc. An especially preferred EUU is another TCW, a portal comprising more than one TCWs or a device using a browser-based application.

The EUU of the present invention is not limited to a particular communications unit/ device or any communications network. Rather, communications by means of the (first) end user unit can occur via any communications network such as regular telephone networks, mobile communications networks, computer networks, radio transmission networks, the Internet, etc. Further, the first end user unit is not restricted to single devices or means, but can also include two and more units, devices, means and the like providing data/information sending and/or receiving capabilities for communications purposes, e.g., an ordinary letter and a scanner.

The end user unit EUU is adapted to perform network-based communications. Thus, the EUU is connectable to a network or rather able to communicate with a network. Thus, data information can be processed in a network. A network in this context is a physical transport medium in which data and/or signal can be fed. For example, an ordinary letter itself is adapted to perform network-based communication when scanned or digitized and supplied into a TCP/IP network.

[01 - Web site] The terms "web site" and "web page" define sites and sub-sites associated thereto which can be uniquely addressed by means of a single address, like a telephone number or an IP address, an URL, etc. It is also advantageous to use such a "web site" in a 3G-communication environment, especially an UMTS-environment. Preferably, such a web site is a site known from the Internet with a specific URL, which can be accessed by Internet visitors, and by the web site host. The web site host is the owner of the web site.

This web site can include one or more web pages. These web pages are part of the one web site. It should be noted that the terms "web site" and "web page" are not to be considered to limit the present invention to conventional web sites and WebPages known from the Internet. Thus, the web site and its web page(s), respectively, can be accessed by establishing a communications link from the first end user unit independently of the network(s) employed.

[01 - TCW] Preferably, the web site is a telecommunications web site corresponding to a first specific entity and is adapted to provide, upon an access by the first end user unit, for direct private communications between the first end user unit and the first specific entity.

[01 - assigned to one SE] Preferably, such a web site is assigned to or personalized for or corresponding to a specific person or entity. Such a first specific entity (SE) can be a person, a company or any other entity. The specific entity preferably acts as the host of the telecommunication web site TCW. Especially preferably, the specific entity (SE) is a single entity, e.g., a specific user or owner (e.g., a single person, a company, a unit of a company, etc.) of the telecommunications web site, a specific address, a specific location, a specific end user unit and the like.

[01 - direct private communication] Preferably, the communication established between the EUU1 and the SE is a direct private communication. A direct private communication is a communication in which a third party can not overhear the parties to the communication. The communication is not controlled by a third party or monitored by a person like a System Operator in a chat-forum. The communication takes place between the host of the telecommunications web site, i.e., the specific entity, and the visitor of the telecommunication web site, i.e., the person using the first end user unit. The private communication is a non-public communication.

The telecommunications web site of the present invention designates a site which is particularly adapted and provided to be used for communication, preferably personal communication, direct private communication such as a telephone conversation, e-mail exchange, fax-communication, file-exchange, etc. Especially preferred, the telecommunications web site is adapted to be used for telecommunication, i.e., real-time communication between two or more users using electronic media like a telephone or the Internet.

Thus, the communication includes only the user of the EUU1 and the person behind the specific entity SE. It is within the discretion of the person behind the SE to allow third parties to take part in this communication. The user of the EUU1 may be the "caller" and the person behind the SE may be the "called party" of such a private communication. It is also possible that the person behind the SE establishes the communication to the person behind the EUU1. Such a communication will be established only between the EUU1 and the SE.

The TCW can, for instance, be accessed and controlled by the SE via a browser-based application. The SE may then receive all communication on this TCW. For example, in order to perform for direct private communications with a desired person, the respective telecommunications web site of this person is accessed by means of the first end user unit, e.g., under control of a controlling user or system. In response to the telecommunications web site access, the telecommunications web site TCW enables direct and private communications with the specific entity, here the desired person. In other words, communications by means of the telecommunications web site are personalized with respect to the "called" specific entity.

Preferably, the communication takes place on this specific and personalized telecommunications web site, i.e., this specific URL identifying the specific entity, i.e., the called party as host of the TCW. The TCW might then be used interactively, i.e. that the communication may take place between the caller and the called party like in a telephone conversation. Both, the caller and the called party then use the same address for the interaction, i.e. the same URL. It might even be the case, that both the calling party and the called party use telephones as end user units - then the TCW works as a virtual operator connecting both the calling party and the called party.

As will become more evident below, the telecommunications web site serves as a general purpose communications interface for end user units and addressed entities which can include or can be an end user unit itself. As an illustration, the telecommunications web site can be considered as a communications "window", similar to a window of an office counter, where communicating parties are "sitting" on opposite sides of the window and can communicate through speech holes in the window, via an intercom, by gestures, by facial expressions, showing papers with information written thereon, passing documents through a hatch and so on. Comparable thereto, the telecommunications web site according to the present invention allows communications in a plurality of modes and by a plurality of types/formats of data/information.

An advantage of the TCW is that communication can be provided and established multimedial, i.e. using more than one medium. These different media can be used by using different end user units or different networks like for instance PSTN, IP-based networks or UMTS networks.

Another advantage of the TCW is the fact, that no spam-mail can be sent to a TCW. Spammail is sent to e-mail adresses. The access of the TCW via spam-mail programs is not possible since this address of the TCW is not an e-mail address.

[02] In a preferred embodiment of the communications environment according to the present invention the telecommunications web site (TCW) is adapted to provide for a bi-directional private communications between the first end user unit (EUU1) and the specific entity (SE). Thus, the established communication is more intercommunicative and more acceptable for persons that wish to communicate real-time, i.e., where action, reaction and interaction are perceived as being instantaneous by a human being.

For communicating by means of the telecommunications web site, the first end user unit can access the telecommunications web site by providing a telecommunications web site address, comparable to a telephone number, an IP address, an Internet domain name and the like. The telecommunications web site address uniquely identifies the telecommunications web site and, thus, the specific entity corresponding thereto. Upon establishment of the direct private communications, both the first end user unit and the specific entity communicate with each other virtually in real-time via the telecommunications web site. As a result, it is possible, as in a telephone call, to bi-directionally communicate. This can be accomplished by the telecommunications web site being adapted to provide for a bi-directional private communications between the first end user unit and the specific entity.

[05] According to a preferred embodiment, the communications environment comprises a second end user unit (EUU2) being associated to the specific entity (SE) and being adapted to perform network-based communications, wherein the telecommunications web site (TCW) is adapted to provide for the direct private communications as direct private communications between the first end user unit (EUU1) and the second end user unit (EUU2). Thus, the specific entity SE may use any end user unit EUU desired to communicate with the other party, i.e., with the person behind the first end user unit EUU1. Thus, the SE is not limited to a device used to access the TCW (for instance via a browser-based application) but may rather use any known communication device. Again, no limitations are imposed on the second end user unit; i.e., the second end user unit is not limited to a particular communications unit/device or any communications network. Here, the telecommunications web site is adapted to provide for the direct private communications as direct private communications between the first end unit EUU1 and the second end user unit EUU2. The utilization of the second end user unit EUU2 depends from the actually properties of the specific entity. In the case the specific entity is adapted to provide for communications comparable to an end user unit, the direct private communications can occur without any further end user unit. On the other hand, employing the second end user unit makes it possible to perform the direct private communications between the first end user unit and any type of end user unit serving as or being comprised by the second end user unit. For example, if the specific entity indicates a single person, direct private communications can take place between any communications device of this person, e.g., a personal (portable) computer, a mobile telephone, a fax machine, a telephone, UMTS devices, memory devices, etc., and the first end user unit.

Communications via the telecommunications web site are not limited to any specific type of end user unit and specific entity. In particular, telecommunications web site-based communications can originate from and can be designated to any communications unit, such as telephones, personal computers, portable computer systems, fax devices and the like. Moreover, users of telecommunications web sites do not have to perform specific interactions in dependence of used end user units. Rather, the end user units are used in a common manner. For example, in the case of the first end user unit being a telephone, address information (like a telephone number) is inputted by the calling user and a communications link is established to the called destination (here the specific entity or an associated end user unit and a user thereof, respectively). Then, interacting with the respective end user units can perform communications. In particular, called and calling users can use their end user units independently of the type of end user unit of the counterpart end user unit. As result, for example, a calling user can utilize a telephone, while the called user communicates by means of a personal computer.

[10] The object of the present invention is also achieved by a telecommunications web site (TCW), comprising at least one web page, wherein the web site is a telecommunications web site (TCW) corresponding to a specific entity (SE), and the telecommunications web site (TCW) is adapted to provide, upon an access by a first end user unit (EUU1), for direct private communications between the first end unit and the specific entity (SE).

The object of the invention is also accomplished by a method including the steps of:
providing a web site including at least one web page corresponding to a specific entity (SE) and being adapted to provide direct private communications, accessing the telecommunications web site (TCW) by a first end user unit (EUU1), and providing, in response to the accessing the telecommunications web site (TCW) by the first end user unit (EUU1), direct private communications between the first end user unit (EUU1) and the specific entity (SE). With this method, the advantages of the communication between an end user unit and a TCW is accomplished.

In a preferred method according to the invention, a further step is included of providing the direct private communications as bi-directional private communications between the first end user unit (EUU1) and the specific entity (SE) by the telecommunications web site (TCW). Thus, the advantages of communicating bi-directional are accomplished.

[multimedial chain] Preferably, the communications link is a multimedial chain. Thus, it is possible to combine several communications links to one communications link. A multimedial chain is a chain of different kinds of communications links. For instance, a PSTN-end user unit 1 may be connected via the PSTN-network via a gateway to the Internet. Via the TCP/IP protocol it may reach the TCW 1 on the portal TCP 1. Then, a link from portal TCP 1 to TCP 2 is provided via an optical fiber followed by an ATM-WLL connection. On portal TCP 2, the connection is realized via the TCP/IP protocol and to a second UMTS-based end user unit via a second gateway on the TCP 2. Thus, several media are used to establish one communications link between the two end user units. Preferably, the communication is established according to the most effective path. Most effective preferably means the path with the highest quality of service. It may also mean the path with the lowest cost or billing structure, or a combination of these criteria.

Preferably, the multimedia chain not only provides for one path or channel but for several channels parallely. Thus, one multimedia chain may preferably exist of several paths connecting one end user unit to another end user unit or even several end user units. These parallel multimedial chains may be identical or different to each other. Thus, it is possible to connect a person using a telephone and a fax machine parallely to another person using one TCW on a computer and a UMTS device. The basic arrangement has two parallel paths or channels. These paths may be identical or based on different media. Such a path may include only one media each

[01] The object of the invention is also achieved by a communications environment, comprising: a first end user unit (EUU1) being adapted to perform network-based communications, and a web site including at least one web page, wherein the web site is a telecommunications web site (TCW) corresponding to a specific entity (SE), and the telecommunications web site (TCW) is adapted to provide, upon an access by the first end user unit (EUU1), for direct private communications between the first end user unit (EUU1) and the specific entity (SE), including a connection means (CM) for establishing a communications link from the first end user unit (EUU1) to the specific entity (SE) of the telecommunications web site (TCW). With this combination of a TCW with a connection means, it is possible to connect different end user units from different technical environments to each other. One PSTN-end user unit may connect to an IP-end user unit by virtue of the connection means. This connection is provided and/ or established by virtue of the TCW. Preferably, this connection is established via the TCW.

[02] In a preferred embodiment, the connection means (CM) is controlled by the telecommunications web site (TCW). By controlling the connection means by the TCW, the TCW can work as a "virtual operator". The TCW can now connect two or more end user units by controlling the connection means that are used to establish this specific connection between these end user units. This connection is established and/ or provided by the TCW, not necessarily via the TCW. Of course, one of the end user units can be the TCW of the specific entity or the computer controlling the TCW, respectively.

[03] Preferably, the connection means (CM) is a converter, an adapter, an IP-switch, an ATM-switch, a mechanical or electro-mechanical switching board, a protocol translator, a gateway, especially a telephone network gateway, a UMTS/ G3 network gateway, a computer network gateway, a television network gateway, a cable network gateway and/ or an Internet gateway or a combination of these components. With these components, the TCW may establish a connection between the specific end user units building up chains of components to establish this connection. Preferably, these chains of components also comprise transport means like cable, wire, networks, radio communications, etc.

According to a preferred embodiment, a first gateway (G11,..., G1n) is provided for establishing a communications link from the first end user unit (EUU1) to the telecommunications web site (TCW) in response to a request by the first end user unit (EUU1) to access the telecommunications web site (TCW). Thus, the use of any end user unit for communicating by means of the communication environment is enabled. As an example, the first gateway can provide for a link between a PSTN network and a computer network or the Internet. Thus, a telephone as a first end user unit can communicate with a personal computer connected to the Internet as a second end user unit.

In another preferred embodiment, the communications environment according to the present invention includes a second gateway (G21,..., G2n) for establishing a communications link from the telecommunications web site (TCW) to the specific entity (SE) in response to the direct private communications provided by the telecommunications web site (TCW). Thus, various additional end user units can be connected to each other via the telecommunication web site TCW.

As a result, in a comparable manner, a restriction to any special type of specific entity usable with the telecommunications web site can be resolved. According to a preferred embodiment, a second gateway is provided for establishing a communications link from the telecommunications web site to the specific entity in response to the direct private communications provided by the telecommunications web site. As an example, the second gateway can provide for a link between the telecommunications web site to a PSTN network, a computer network or the Internet servicing the specific entity.

With respect to both the first and second gateways, a communications link is not limited to a single physical data transmission link or line, but can include different transmission paths, utilized in series and/or in parallel. Thus, communications links can comprise communications links within different networks. Further, communications links can be established to different communications sources and/or destinations at the same time, e.g., in the case the first end user unit and/or the specific entity include different devices or means for sending and receiving communications data/information.

[03] To enhance the performance of the communications environment according to the present invention and to obtain, at least partially, independence from other communications environments, the communications environment can comprise a network including at least one of a telephone network, a computer network and/ or the Internet for performing at least one of the network-based communications and the direct private communications.

[04] In this sense an optimization can be achieved by at least one of the first gateway and second gateway being at least one of a telephone network gateway, a computer network gateway and an Internet gateway.

[08] Preferably, the object of the invention is accomplished by a first telecommunications web site (TCW1) corresponding to a first specific entity (SE1), wherein the first telecommunications web site (TCW1) is adapted to provide, upon an access by a second telecommunications web site (TCW2) corresponding to a second specific entity (SE2), for direct private communications between the first specific entity (SE1) and the second specific entity (SE2)

[09] In a preferred embodiment of the first telecommunications web site (TCW1) of this invention, the first and/ or the second telecommunications web sites are/is adapted to provide, upon an access by the other telecommunication web site, for data exchange between the first and the second telecommunications web site (TCW).

[10] Preferably, the object of the invention is also accomplished by a method for providing communications, including the steps of:
providing a first telecommunications web site (TCW1) including at least one first web page corresponding to a first specific entity (SE1) and being adapted to provide direct private communications,
providing a second telecommunications web site (TCW2) including at least one second web page corresponding to a second specific entity (SE2) and being adapted to provide direct private communications,
accessing the first telecommunications web site (TCW1) by the second telecommunications web site (TCW2), and
providing, in response to the accessing the telecommunications web site (TCW1) by the second telecommunications web site (TCW2), direct private communications between the first specific entity (SE1) and the second specific entity (SE2).

[11] A preferred embodiment of the method of the invention includes the step of:
providing, in response to the accessing, for data exchange between the first and the second telecommunications web site (TCW).

With this combination of a TCW and a connection means, especially a gateway, it is for instance possible for the specific entity as host of the TCW to establish a communication between the internet-based TCW and a PSTN-network. Thus, it is not only possible to establish a communication over two telephones via the Internet but via a PSTN-network. The specific entity as host of the TCW can e.g., choose a connection between a first telephone as a first end user unit and another telephone as a second end user unit. The access to establish this communications link will then be initiated from the TCW via a controlling device to a PSTN-network between these two telephones. As an example, both telephones begin to ring - the connection is established in the PSTN-network between these two telephones on access through the TCW - but not via the TCW.

The object of the invention is also achieved by a multimedial communications environment, comprising: a telecommunications web site (TCW) corresponding to a specific entity (SE), a first connection means (CM1) adapted to connect a first end user unit (EUU1) and a first end user unit (SE-EUU1) of the specific entity (SE), a second connection means (CM2) adapted to connect a second end user unit (EUU2) and a second end user unit (SE-EUU2) of the specific entity (SE) wherein both the first connection means (CM1) and the second connection means (CM2) are controlled by the telecommunications web site (TCW). With this arrangement, it is possible to have a multimedial connection between two or more parties. This arrangement may be adapted to use the best connection for each medium or each line, respectively. The "best connection" may be the connection with the best quality of service or the lowest costs or a combination thereof.

Multimedial is the use of more than one medium like devices of PSTN-networks, UMTS-networks, TCP/IP based networks, etc. For example, the connection of a telephone in a PSTN-network to a UMTS device in an UMTS-network is a multimedial connection. This connection parallel to a connection of a computer in a TCP/IP based network to another computer in a TCP/IP based network is also a multimedial connection. Thus, the use of more than one medium to establish and provide a connection is a multimedial connection. Further, the parallel use of different media is a multimedial connection.

Preferably, the first connection means (CM1) is an IP-switch and/ or the second connection means (CM2) is a PSTN-switch. Thus, it is possible to connect two parties each using a telephone in a PSTN-network and a computer with a camera to exchange real-time video data at the same time. Since the TCW is in control of both connection means, it is possible to handle this multimedial connection by the simple control of the TCW, i.e. a simple mouse click in a browser based application. Establishing such a multimedial connection is achieved by choosing the party to be called in the TCW and choosing the kind of connection(s) to be established. All different multimedial connections are then established by the TCW that controls the respective connection means CM to establish such a connection. In addition, the TCW controls the multimedial connection by controlling the respective connection means. If the connection is to be terminated, the TCW manages the shut down of all types of connection involved.

Preferably, the first end user unit (EUU1) and/ or the first end user unit (SE-EUU1) of the specific entity (SE) comprises at least one video device, especially a video camera and/ or a video monitor. Especially wherein the second end user unit (EUU2) and/ or the second end user unit (SE-EUU2) of the specific entity (SE) comprises at least one PSTN device, especially a stationary telephone and/ or a mobile telephone. With such an arrangement, it is possible to establish a video conference. Preferably, such a video conference is a combination of a PSTN-connection for the voice and a TCP/IP connection for the pictures to be transmitted. With such an arrangement, the voice will be transmitted with no delay and the pictures may have a certain delay in the transmission which on the other hand is acceptable for communication.

The object of the invention is also achived by a telecommunications web site (TCW) corresponding to a specific entity (SE) comprising a first connection means (CM1) adapted to connect a first end user unit (EUU1) and a first end user unit (SE-EUU1) of the specific entity (SE), a second connection means (CM2) adapted to connect a second end user unit (EUU2) and a second end user unit (SE-EUU2) of the specific entity (SE) wherein both the first connection means (CM1) and the second connection means (CM2) are controlled by the telecommunications web site (TCW). With such a telecommunications web site, a multimedial connection can be established and provided.

Further, the object of the invention is achieved by a method of connecting two parties (A, B) in a multimedial communications environment comprising the steps of: connecting to a telecommunications web site (TCW), choosing the kind of multimedial connection to be established, establishing each part of the chosen multimedial connection via a connection means (CM) controlled by the telecommunications web site (TCW). With this method, a multimedial connection or link can be established that allows for parallely using different end user units in one connection to another party.

[01] The object of the present invention is also achieved by a communications environment, comprising a first web site including at least one web page, wherein the first web site is a first telecommunications web site (TCW1) corresponding to a first specific entity (SE1), and a second web site including at least one web page, wherein the second web site is a second telecommunications web site (TCW2) corresponding to a second specific entity (SE2), and the first and/ or the second telecommunications web sites are/is adapted to provide, upon an access by the other telecommunication web site, for direct private communications between the first specific entity (SE1) and the second specific entity (SE2). With two TCW's, both, calling entity and called entity can benefit from the communication options and opportunities of a TCW.

[02] In a preferred embodiment of the communications environment of the present invention, the first and/ or the second telecommunications web site are/is adapted to provide, upon an access by the other telecommunication web site, for data exchange between the first and the second telecommunications web site (TCW). Thus, it is possible to exchange data between both TCW's without the specific entities having to actively communicate about the content of this data. The data exchange can take place simultaneously or even before the direct and private communication between the specific entities is established.

[03] Preferably, the data exchange comprises data including at least one of:
- personal data of the specific entity (SE);
- communication preferences of the specific entity (SE);
- background information of the specific entity (SE); and
- a combination of any of the aforementioned data.
Thus, it is possible that specific data is exchanged that may have changed and needs to be updated. This can take place without the first specific entity having to actively inform the second specific entity about this new information and vice versa. Preferably, both TCW's exchange data. It is also possible that only one of the communicating TCW's provides data and the other TCW is adapted to download this data.

Such data to be exchanged may be personal data of the specific entity such as contact information (telephone number, fax number, e-mail, address, etc.), data of a more personal kind like birthday, matrimonial status (married, bachelor, etc.), nationality, home address, photos, movies, videos, articles, text, religious confession, professional information, etc.

Further, communication preferences of the specific entity may be exchanged. Such preferences may include the way how the person wants to be contacted (via telephone, via video-conference, via e-mail, etc.) or the time when this person wants to be contacted or the time zone in which the specific entity lives or works (western time, European time, etc.), meta information on communication, languages, data exchange formats, passwords, cookies, requirement of ssl-connection, virus scanner information, etc.

Further, background information of the specific entities may be exchanged like hobbies, personal interests, a résumé of the specific entity, a homepage, etc.

[04] It is especially preferred that the kind of data to be exchanged is predefined by the specific entity. Thus, the specific entity can not only define the content of the data to be exchanged but also define what kind of data is to be exchanged. With that feature, the TCW can be prepared to share exactly the information and exchange that kind of data the specific entity predefined to share.

[05] In a preferred embodiment, the data is exchanged automatically. Thus, (new) data can be provided to the calling party, e.g., SE1 from the called party SE2 without having to communicate actively about the new data. In a further embodiment, the data is exchanged on request of one party, e.g., the calling party (SE1) can select a button provided on the second TCW in order to download the data from the second specific entity.

[06] In a preferred embodiment of the present communication environment there are provided more than two telecommunications web sites (TCWi). Thus, it is possible to communicate with more than one specific entity via the personal TCW of different entities. With such a standardized group of specific entities all using a personalized TCW, it is extremely easy to communicate and share information or exchange data to be distributed for the first time or updated. It is possible to inform people of a new address after having moved without the need to call and inform each person. The specific entity with the new address will inform any other specific entity with a TCW automatically the next time when communicating via the data exchange between the first and second TCW "without mentioning" the new address actively.

[07] In a preferred embodiment of the communication environment of the present invention, all telecommunications web sites (TCW) answer to the same basic protocol of data exchange. Thus, it is possible to exchange a minimum piece of information on each specific entity of a TCW via the data exchange between the TCW's. With such a standardized basic information protocol it is possible to exchange necessary data that should always be exchanged between all specific entities using a TCW. Such data is preferably available communication channels, a security password, recognition data (cookies), virus scanner updates, software updates.

The object of the invention is also achieved by a first telecommunications web site (TCW1) corresponding to a first specific entity (SE1), wherein the first telecommunications web site (TCW1) is adapted to provide, upon an access by a second telecommunications web site (TCW2) corresponding to a second specific entity (SE2), for direct private communications between the first specific entity (SE1) and the second specific entity (SE2). With such a telecommunications web site, full advantage can be taken of the communication via a TCW.

Preferably, the first and/ or the second telecommunications web sites are/is adapted to provide, upon an access by the other telecommunication web site, for data exchange between the first and the second telecommunications web site (TCW).

The object of the invention is also achieved by a method for providing communications, including the steps of:
providing a first telecommunications web site (TCW1) including at least one first web page corresponding to a first specific entity (SE1) and being adapted to provide direct private communications,
providing a second telecommunications web site (TCW2) including at least one second web page corresponding to a second specific entity (SE2) and being adapted to provide direct private communications,
accessing the first telecommunications web site (TCW1) by the second telecommunications web site (TCW2), and
providing, in response to the accessing the telecommunications web site (TCW1) by the second telecommunications web site (TCW2), direct private communications between the first specific entity (SE1) and the second specific entity (SE2).

In a preferred embodiment the method includes the step of
Providing, in response to the accessing, for data exchange between the first and the second telecommunications web site (TCW).

As a result, it is advantageous to use two TCW's communicating with each other. Thus, an enhanced, faster, more secure and more pleasant through automation way of communication is possible.

[01] A communications environment wherein at least one telecommunications web site (TCWi) is provided on a portal (P) further achieves the object of the invention. For providing the telecommunications web site, it is preferred to use a portal or a cluster of sub-portals serving as a portal. Every member of the portal may use the infrastructure of the portal. This enhances the nature of the telecommunications web site to serve as a general purpose communications interface or communications "window".

A portal preferably has several resources which are accessible by all members of this portal. Thus, all members can share these resources. The members of a portal do not have to have their own resources but can benefit from the resources provided by the portal. Such resources can be services or content data. Preferably, the services comprise navigation help like search tools or directories, communication tools like chat forum or e-mail or mobile phone services or a calendar tool or newsgroup servers/ directories or encrypting services like certifications for secure communications or wake-up services. Further, the portal might comprise entertainment services like games in the field of the stock exchange market, services of a betting office, comics, greeting cards or radio stations to listen to. Further, the portal might provide services on traffic information, download areas for software, providing webspace, services on registering domains, etc. Preferably, the portal provides content data like for instance news on financial issues, sport events, political news, television program, weather information or horoscopes. Further it might provide information systems for route planning, consumer services like ordering newsletters, online-shopping, modules for comparing services like telephone fees, car rental fees or insurances. Further, the portal might provide certain services with respect to the communication of the telecommunication web sites, e.g. a server shared by all TCW's that provides the history information of the connections of the TCW.

[02] Preferably, the portal (P) comprises connection means (CM) accessible by the at least one telecommunications web site (TCW). Such connection means are also resources of the portal that can be used by the web sites of the portal. These connection means may be means with which the portal can connect to another network as described above. Preferably, such connection means are converters, adapters, IP-switches, ATM-switches, protocol translators, gateways, especially UMTS network gateways, or a combination thereof. With such resources, the portal is a more advanced communication platform since on the portal resources are provided which the single user of a telecommunication web site usually can not afford to acquire.

[03] To enhance the nature of the Telecommunication Web site to serve as a general communication interface it is preferred to use a portal of Telecommunication Web sites, a telecommunication portal or TCP. The Telecommunication Portal represents an accumulation of Telecommunication Web sites on the specific portal. The Telecommunication Portal has preferably an integrative consistent addressing scheme, comprising every single unique Telecommunication Web site residing on this Telecommunication Portal and thus enabling the definite assignment of different Telecommunication Web sites of a specific Telecommunication Portal by the structure of the Telecommunication Web site address. Preferably, such an integrative consistent addressing scheme is based on the same top and/ or second level domain. Thus, the user with the NAME1 of a portal WEB.DE may have an address according to an addressing scheme "NAME1.WEB.DE", another user with the NAME2 may have the address "NAME2.WEB.DE". The NAME can be an alphanumerical figure, preferably a telephone number. Especially preferred is a telephone number with an alphanumerical prefix, designating the country of the user and/ or the portal. In another preferred embodiment, such an addressing scheme is the use of a common feature in all the addresses of the users of one portal. Such a common feature may be a prefix, a suffix, a certain format of a telephone number used as address, etc. Thus, it can be recognized from the address, whether this user belongs to a certain portal or not.

[04] Preferably, the residing Telecommunication Web site on one portal are connected to each other. In contrast to Telecommunication Web sites not belonging to a specific Telecommunication Portal and thus communicating with each other by means of public accessible communication networks like the internet, PSTN-networks, etc., the Telecommunication Portal i.e., the TCW's on a portal, provides a particular, "physical" connection, e.g., a fiber optics or copper cable interconnection, that allows a stable, high speed and high-performing data transmission capability between different Telecommunication Web sites belonging to the same Telecommunication Portal and thus enhancing the communication possibilities. Preferably, the TCW's of one portal are located on one server and use the same data base.

[05] The object of the invention is also achieved with a telecommunications portal (TCP) comprising at least two telecommunications web sites (TCWi), wherein the telecommunications web sites (TCWi) on the portal (P) have an integrative consistent addressing scheme.

[06] Further, the object of the invention is achieved by a method for providing communications, including the steps of:
providing a first telecommunications web site (TCW1) including at least one first web page corresponding to a first specific entity (SE1) and being adapted to provide direct private communications,
providing a second telecommunications web site (TCW2) including at least one second web page corresponding to a second specific entity (SE2) and being adapted to provide direct private communications,
accessing the first telecommunications web site (TCW1) by the second telecommunications web site (TCW2), and
providing, in response to the accessing the telecommunications web site (TCW1) by the second telecommunications web site (TCW2), direct private communications between the first specific entity (SE1) and the second specific entity (SE2)
characterized in that both telecommunications web sites (TCW1, TCW2) reside on one portal (P).

The object of the invention is also achieved by a communications environment, comprising: a first web site including at least one web page, wherein the first web site is a first telecommunications web site (TCW1) corresponding to a first specific entity (SET), and a second web site including at least one web page, wherein the second web site is a second telecommunications web site (TCW2) corresponding to a second specific entity (SE2), and the first and/or the second telecommunications web sites are/is adapted to provide, upon an access by the other telecommunication web site, for direct private communications between the first specific entity (SE1) and the second specific entity (SE2) wherein both the first and the second telecommunications web site are provided on a portal (P). With two TCWs provided on a portal, enhanced communication patterns can be used. Thus, communication between two TCWs on a portal is accomplished faster and more securely.

In a preferred embodiment of the communications environment of the present invention, the first and/ or the second telecommunications web sites are/is adapted to provide, upon an access by the other telecommunication web site, for data exchange between the first and the second telecommunications web site (TCW). With such a data exchange, the communication between both TCWs can be improved. This data exchange can be accomplished faster since both TCWs are on the same portal.

Preferably, the data exchange between the two TCWs can be accomplished as in the case of two TCWs not belonging to the same portal - but much faster and according to certain protocols that are valid on the portal. Another advantage of Telecommunication Portals is the uniformed/standardized type of information and data which can be provided through a Telecommunication Web site and the way the information is processed, e.g., personal information of the specific entity (SE) corresponding to the Telecommunication Web site or presence information.

Moreover the Telecommunication Web site provides for a certain degree of trust applying to the data that is provided by a Telecommunication Web site on the one hand and the SE corresponding to a specific Telecommunication Web site on the other hand. This again enhances the communication possibilities and in particular the speed of data transmission between Telecommunication Web sites of the same Telecommunication Portal by the automation of certain authorization processes.

Thus, the arrangement of TCW's on a portal enables an enhanced communication between SEs corresponding to specific Telecommunication Web sites belonging to the same Telecommunication Portal by allowing for instance SE1 to access SE2 using e.g., a stationary telephone EUU1 and nevertheless allowing the called SE2 to find out automatically, that SE1 is on his part assigned to a Telecommunication Web site of the same Telecommunication Portal. Thus, it is possible to establish a communication link not only to EUU1 but also to a multitude of single devices or means (EUUs). Moreover, the Telecommunication Web site of SE2 is able to establish automatically such enhanced communication to different EUUs without requiring further action of one of the communicating entities since this information is present on the same portal. Thus, TCW1 knows automatically all possible EUU's assigned to SE2 and may use these for providing/ establishing a communication between SE1 and SE2.

Furthermore it is possible to access a certain Telecommunication Portal in order to retrieve data about the different Telecommunication Web sites residing on that Telecommunication Portal in total, for instance about the structure of SEs (natural persons or companies, etc.) corresponding to the Telecommunication Web sites on this Telecommunication Portal.

In contrast to the communication scenarios provided by two communicating Telecommunication Web sites independently organized (i.e., without residing on or belonging to a specific Telecommunication Portal), through automation an enhanced, faster, more secure and more pleasant way of communication is possible.

Since the telecommunications web site are residing on or provided by a portal, communication will be arranged "in between" the communicating parties, here the first specific entity of a first TCW1 and the second specific entity of the second TCW2, in a physical sense. Since both telecommunication web sites are physically provided on the same portal, communication and especially data exchange can be accomplished much faster. In addition, the communication protocol may be standardized within one specific portal. Thus, the connected telecommunication web sites can communicate directly since both TCW's "know" what data is to be exchanged within this specific portal without having to crosscheck. This provides a faster and more secure connection between both TCW's of a specific portal.

Preferably, the portal is also adapted to establish communications links for performing the direct private communications. For example the portal can, upon an access by the first telecommunication web site TCW1 to the second telecommunications web site TCW2, establish a communications link there from to the first telecommunications web site TCW1. This communications link may be different compared to the communications link used for the access. As an option or in addition thereto, the portal can establish a communications link from the telecommunications web site to the specific entity or to an associated end user unit.

The object of the invention is also achieved by a communications environment wherein at least two portals (P1, P2), each comprising at least one telecommunications web site (TCW1i, TCW2j), are provided. With two telecommunications portals (TCP1, TCP2), communication can be established between a first TCW1 residing on the first portal P1 and a second TCW2 residing on the second portal P2. With the use of two portals, the TCW's residing on different telecommunication portals (TCP's) may benefit from the infrastructure of both the TCP's when connecting.

[02] In a preferred embodiment of the communications environment of the invention, the portals (P1, P2) are adapted to establish at least one communications link for performing communications, especially direct private communications. Thus, the communication may be established between an end user unit 1 of a TCW 1 on the TCP 1 that is supplied by a first gateway or connection means CM 1 not available on the TCP 2. Nevertheless, a communications link can be established since both TCP 1 and TCP 2 are connectable to each other.

[03] Preferably, the two portals communicate according to a common protocol. With the use of a common protocol, the communications link can be established not only in a basic way but in a more enhanced way. This allows for more speed and security in the communication between both TCP 1 and TCP 2. Such a protocol may define specific ways of exchanging data and even specify certain information on the TCW's of the different portals to be shared between both the portals TCP 1 and TCP 2.

[04] Preferably, the communications link is a synchronous communication link. With such a synchronous communications link like an ATM-link, the communication between the portals can be realized in a real-time mode. This means that the communication is not irritated by delays in the transmission of the data. Preferably, the data packages are sent and received without delay that would cause an irritation with a human being, i.e. not causing a delay of more than 500 ms, preferably not more than 250 ms. A link with such little delay is accepted as "synchronous". Preferably, the communication is not randomly packet orientated like in a TCP/IP connection. With TCP/IP, the data package is routed from the sender to the receiver according to a routing strategy. As a result, a package sent at a time t1 may be received by the receiver after having received a second package sent after the first package at time t2. The receiver then brings all packages back into order. Thus, the packages are received "asynchronous" rather than package after package, i.e. "synchronous". If the packages are sent and received fast enough and brought back into order without causing a delay of more than 500 ms, such a link was still a synchronous link.

Possible ATM-links may be realized using ATM passive optical networks (APON), direct optical fiber connections or copper wires with for instance ADSL/ HDSL technology, ATM-radio links (ATM-Wireless Local Loop, ATM-WLL), etc. Preferably, the connection link is established via a dedicated line.

[multimedial chain] Preferably, the communications link is a multimedial chain. Thus, it is possible to combine several communications links to one communications link. A multimedial chain is a chain of different kinds of communications links. For instance, a PSTN-end user unit 1 may be connected via the PSTN-network via a gateway to the Internet. Via the TCP/IP protocol it may reach the TCW 1 on the portal TCP 1. Then, a link from portal TCP 1 to TCP 2 is provided via an optical fiber followed by an ATM-WLL connection. On portal TCP 2, the connection is realized via the TCP/IP protocol and to a second UMTS-based end user unit via a second gateway on the TCP 2. Thus, several media are used to establish one communications link between the two end user units. Preferably, the communication is established according to the most effective path. Most effective preferably means the path with the highest quality of service. It may also mean the path with the lowest cost or billing structure, or a combination of these criteria.

Preferably, the multimedia chain not only provides for one path or channel but for several channels parallely. Thus, one multimedia chain may preferably exist of several paths connecting one end user unit to another end user unit or even several end user units. These parallel multimedial chains may be identical or different to each other. Thus, it is possible to connect a person using a telephone and a fax machine parallely to another person using one TCW on a computer and a UMTS device. The basic arrangement has two parallel paths or

channels. These paths may be identical or based on different media. Such a path may include only one media each

[06 ] The object of the invention is also achieved by a first telecommunication portal (TCP1) comprising at least a first telecommunications web sites (TCW1i), wherein the first telecommunications portal (TCP1) is adapted to provide for establishing at least one communications link to a second telecommunications portal (TCP2).

[07] In a preferred embodiment of the first telecommunications portal (TCP1) of the invention, the communications link is established according to a protocol predefined by the first telecommunications portal (TCP1). [05] Preferably, the first telecommunications portal (TCP1) provides for more than one protocol. Such a protocol may define the way in which communication is established between the two portals. A portal can have more than one protocol, preferably one protocol is chosen for establishing communication between two portals. With such protocols, the communication between two TCWs belonging to different portals can be enhanced. Such a protocol may define the way of automatic data exchange between the portals. Such data may comprise the infrastructure of the portal, e.g. the kind and number of resources of the portal, information on which resources may be used by "visitors", conditions that have to be satisfied to allow the usage of these resources, security information, information on the capacity of the portal and/ or the resources, number of TCW's in the portal, languages spoken, lists of protocols, information of the time zone in which the portal is operated, etc.

Preferably, the protocol provides a definition of the kind of data to be exchanged between a first telecommunications web site (TCW1) of the first telecommunications portal (TCP1) and a second telecommunication web site (TCW2) of the second telecommunications portal (TCP2).

Especially preferably, the communication link is established between the first telecommunications web site (TCW1) and a second telecommunications web sites (TCW2) of the second telecommunications portal (TCP2).

The object of the invention is also achieved by a method for providing communications, including the steps of:
providing a first telecommunications portal (TCP1) including a first telecommunications web site (TCW1) including at least one first web page corresponding to a first specific entity (SE1) and being adapted to provide direct private communications,
providing a second telecommunications portal (TCP2) including a second telecommunications web site (TCW2) including at least one second web page corresponding to a second specific entity (SE2) and being adapted to provide direct private communications,
accessing the first telecommunications web site (TCW1) by the second telecommunications web site (TCW2), and
providing, in response to the accessing the telecommunications web site (TCW1) by the second telecommunications web site (TCW2), direct private communications between the first specific entity (SE1) and the second specific entity (SE2) via a communications link between the first telecommunications portal (TCP1) and the second telecommunications portal (TCP2).

Preferably, the communications link is a physical linkage and/ or a dedicated ATM linkage and/ or a virtual private network.

Preferably, the method comprises the step of selecting a joint protocol for the communications link between the first telecommunications portal (TCP1) and the second telecommunications portal (TCP2).

Especially, the interrelation of two Telecommunication Portals is defined by their connection. Corresponding to the above described connection between different Telecommunication Web sites residing on the same Telecommunication Portal again it is preferred to build up either a "physical" linkage between two Telecommunication Portals or a dedicated ATM linkage(ATM = Asynchronous Transfer Mode) or a virtual private network. Other possible and preferred connections and links between two portals are described above.

This in turn enhances the data transmission capability between TCW1 belonging to TCP1 and TCW2 belonging to TCP2 in the same way it is enhanced within the same Telecommunication Portal.

In a preferred embodiment, the identical protocol of two web sites on the same portal is applied for the communication between two portals. Thus, the above mentioned uniformed/standardized type of information and data which can be provided through a Telecommunication Web site is processed between two telecommunication portals.

In another preferred embodiment, the protocol used between two portals differs from the one used for two web sites residing on the same portal. For instance, a Telecommunication Portal dedicated to a certain company retrieves different data of the SEs corresponding to the single Telecommunication Web sites residing on this Telecommunication Portal (e.g., rank, department, scope of duties) than a Telecommunication Portal dedicated to a commercial TCW-provider would.

Preferably, these standards differ from one Telecommunication Portal to another, which leads to a further characterization of the correlation of two different Telecommunication Portals: Different Telecommunication Portals can agree on terms of enabling the conversion of certain data and information on basis of e.g., a certain joint protocol. The areas of such conversion could be more or less restrictive, depending on the degree of trust between these Telecommunication Portals.

The advantage of a communication of two Telecommunication Web sites belonging to different Telecommunication Portals is the range of possibilities for building up a communication link between them. In the case of no existing "physical" or virtual private linkage between the two Telecommunication Portals a communication of the two Telecommunication Web sites is possible via public accessible communication networks such as the Internet or the PSTN-networks. Moreover, although the data transmission capabilities in this case are well below those provided by a private linkage they are still clearly higher than even the capabilities of two TCP-independent Telecommunication Web sites because of the above described opportunities of joint protocol-based automatic data exchange.

The object of the invention is also accomplished by a computer program product, including program code portions for carrying out the steps according to one of the methods according to the invention. Preferably, the object of the invention is accomplished by a computer program product, being stored on a computer readable storage medium or in a computer readable memory unit.

Especially, the object of the invention is achieved by a communications environment, comprising a telecommunications web site (TCW) wherein the telecommunications web site (TCW) has an event identifying element (EIE). Also, the object of the invention is achieved by the telecommunications web site TCW itself wherein the telecommunications web site (TCW) has an event identifying element (EIE). This telecommunications web site (TCW) is preferably associated to a telecommunications portal (TCP) as described above.

Preferably, the event identifying element (EIE) is adapted to identify incoming and/or internal events. An incoming event is an event which is directed to the telecommunications web site (TCW) from outside. Preferably, these incoming events are events initiated by a telecommunication network or by an internet based network or by an UMTS network. These incoming events may be telephone calls by other parties, signals of incoming faxes, SMS, e-mail, etc. Further, these incoming events may be signals from UMTS/ 3G devices, diverse internet devices, signals from a newsticker and from newsgroups, etc. In a preferred embodiment of the present invention, these incoming events are events originated by a portal, especially a telecommunications portal. These events may also include calls and signals from this portal. Such signals preferably comprise signals referring to data describing news, e.g. news of the stock market provided by the portal, weather information, etc.

Internal events are events originated by the telecommunications web site (TCW) or by data administered by the telecommunications web site (TCW). Such internal events may be predefined by the user of the telecommunications web site, for instance dates and actions to be taken dependent on date and time, certain other criteria like personal data for instance on birthdays, etc. An internal event may be originated by a data base integrated or associated to the telecommunications web site (TCW) that alerts the host or the user of the telecommunications web site (TCW) that there was a meeting scheduled in the calendar of the telecommunications web site (TCW) in an hour. Thus, the internal event may be a signal from this data base to the event identifying element (EIE) that in an hour this meeting is scheduled to take place. Other internal events may be parameters or data within the system of the TCW such as for instance the information that there is no more storage to store data, conditions set by the user are fulfilled, virus scan software found a virus within the data of the TCW, spam was detected, data is to be transmitted to a group of users or to be transmitted with delay, a button was pushed on the web page of the TCW, a profile is to be loaded by the TCW, for instance a job profile from 8:00 a.m. to 8:00 p.m. and the private profile from 8:00 p.m. to 8:00 a.m., etc.

The event identifying element (EIE) preferably comprises a first set of hard- and software consisting of one or more telephone switches which are adapted to send events to core engines responsible for the identifications of events. A second set of hard- and software consists of one or more real-time servers and web servers communicating with clients via special protocols and https. The real-time servers are responsible for sending user events like for example mouse clicks, timer events, etc. to the core engines which are in turn responsible for the identification of events.

Thus, with the telecommunications web site (TCW) having an event identifying element (EIE), the telecommunications web site (TCW) may be adapted to receive and analyze these incoming events. Preferably, the incoming events are stored and processed by the telecommunications web site (TCW) in further steps.

In a further preferred embodiment of the invention, the event identifying element (EIE) is adapted to identify an event of the group of telecommunications events, telephone calls, signals from faxes, SMS (short message system), WAP (wireless application protocol), page call, http call, i-mode call, web-site visit, MMS (multi media messaging service), e-mail, diverse telecom devices, especially telephones or faxes, DTFM signals, network events, UMTS/ 3G devices, mouse click, status of a device, especially off-hook status of a telephone, scan status of a scanner, messages from newsgroups, presence of a person, especially the user or caller alerts, scheduled events, voice over IP-calls, portal events, portal calls, calls from another TCW, radio network events, television signals, content modifications, keywords, status of an electrical device, video signals, biometrical data signals, status of a switch, login events or a combination of these events.

Preferably, these events include the information on the presence of a person, especially the user or caller and/ or the position where this person is located. Especially, the event may be the information, whether a person is sitting in front of its monitor or computer. This can be accomplished by sensors, preferably integrated into the monitor or the frame or housing of the monitor, which allows to detect the presence of the user. Further, these sensors may be sensors of a surveillance system, especially a common surveillance system for burglar alarms. The location of a specific person may also be defined by a specific cell of a mobile telephone network being used by a mobile telephone associated to this person. Further, geographical information like the GPS-system coordinates may be used to identify the location of this person.

Radio network events may preferably be signals or calls from a radio network.

An event may also be a keyword typed in by a caller accessing the telecommunications web site (TCW) or a password, used to identify a caller or to transmit certain information on access permissions of this caller to the host of the telecommunications web site (TCW). Further, an event may be a login event, i.e. a signal indicating that somebody tries to login or accesses the TCW.

An event may also originate from electrical instruments that may preferably be connected to a network. Thus, this electrical instrument may send signals to the telecommunications web site (TCW) which can be identified by the event identifying element (EIE). Such signals may be related to the status of the electrical device, for example, the ringing of a door bell, the use of tap water, the filling status of a reservoir like a water reservoir or the tank for petrol of a vehicle, a surveillance system for burglar alarms, a signal of an empty fridge, garage doors, climate surveillance systems for instance for showrooms, museums or wine cellars.

These events are preferably transmitted via a network, especially a UMTS-network, an internet-based network or a radio network.

Preferably, an event is the status of a telecommunication device such as a telephone. Thus, there may preferably may be four different events from for instance a telephone like (a) the receiver is lying on the cradle, (b) the receiver is being picked up, (c) the receiver is off-hook or (d) the receiver is being hung up. These four states of the telephone may then be four different events detectable by the event identifying element of the TCW. Further, divers PSTN signals are preferably events being detectable by the event identifying element. Thus PSTN signals are for instance signals like e.g. ISDN signals via D-channel, SS7 signals, UMTS - or mobile telephone signals. Other possible signals are DTFM (Dual Tone Multi Frequency) signals.

Video signals may be used as an event, especially with surveillance systems. Thus, it may be detectable by the identifying element as an event that a certain picture surveyed by a video camera may alter. For instance, it may be detectable that a video picture of a pigeon stable shows the arrival of a specific pigeon. Thus, this information retrieved by the video camera and an associated computer device may be transmitted to the telecommunication web site (TCW). This incoming event is identified by the event identifying element (EIE) of the telecommunications web site (TCW). Further, other information of a specific site surveyed by a video camera may be programmed to initiate an event transmitted to the telecommunications web site (TCW), for example the weather situation, the status day or night, satellite pictures, the tide of the sea, the pollution of a beach, infrared heat pictures and all information resulting from the alteration of a video signal.

Preferably, other signals, especially signals from ultrasonic surveillance systems or sensors like temperature sensors, etc. may be used as an event being able to be identified by the event identifying element (EIE) of the telecommunications web site (TCW). Further, the status of a switch, especially a switch associated to the desk the host of the telecommunications web site (TCW) is working at, may be used as an incoming event. By activating the switch, the host may initiate an event transferred to the telecommunications web site (TCW) detectable by the event identifying element (EIE). Further, it may be preferred to use special keys on the keyboard or shortcuts in a software program to be used which are detectable by the event identifying element (EIE) of the telecommunications web site (TCW). Especially preferred is the use of buttons that can be fixed to the monitor of the user of a TCW or to the desk or to the telephone. Thus, the user may control the TCW even more easily by pushing or activating these buttons.

Thus, all events that may be monitored can be transmitted to the telecommunications web site (TCW) that is adapted to detect and analyze these incoming events by means of the event identifying element (EIE).

In a further preferred embodiment of the invention, the TCW is adapted to process information in a manner depending on the kind of event identified by the event identifying element (EIE). Such processing of information may be preferably the creation of an outgoing event or an internal event or the storage of information or data. Especially preferred, the TCW is adapted to process information that leads to establishing a communication between two parties. Further, the processing of information can be the deleting of a file infected by virus or the virus itself, the switching on or of the TCW at a certain time or date or especially preferred the establishing of communication to another device or party.

By identifying the incoming or internal event, the telecommunications web site may establish the desired communication via a predefined manner depending on the kind of event identified by the event identifying element (EIE). This may include that the telecommunications web site (TCW) is made to establish the communication via a specific network or a specific device, etc. It may also include the possibility that the telecommunications web site (TCW) initiates a specific notification or alert or signal to be sent to the host of the telecommunications web site (TCW) or a predefined group of different other users. It may also include the possibility to allow the telecommunications web site (TCW) for not establishing a communication at all but rather store certain information for further use. It may also be desirable to have the telecommunications web site (TCW) adapted to wait for a cluster of events to be identified, preferably within a certain time period, and then to take steps predefined, preferably by the host of the telecommunications web site (TCW). Thus, the telecommunications web site (TCW) may be adapted to detect and identify certain events of a fax to be sent from a certain number and a date and time criteria set by the host and an SMS message to be received as well as the information that a certain person is present in a certain room before the telecommunications web site (TCW) initiates a certain predefined communication. For example, the telecommunications web site may be adapted and programmed by the host of the telecommunications web site to establish communication with person A as soon as a fax from a specific fax number is received, person A is sitting at a specific desk, the telephone status of this person A is not off-hook and it is before 10:00 p.m. on a certain date. Dependent on specific events or clusters of events, this communication may be established by the telecommunications web site (TCW).

In a further preferred embodiment of the invention, the telecommunications web site (TCW) allows for the creation of an event, especially a predefined event dependent from the event identified by the event identifying element (EIE).

Thus, the telecommunications web site (TCW) may initiate an outgoing event dependent on an incoming event. This outgoing event may be an event similar to the internal and external events described above. Further, the outgoing event may be an alert, a signalling, a notification, a messaging, the establishing of a communication, etc.

Signalling is an outgoing event that indicates in real-time that something is happening. Notification is the information that something is happening or already happened. A notification provides a description of the event itself. Messaging is an exchange of messages like e-mail, SMS, etc. Thus, messaging is an exchange of content.

In general, outgoing events may be of the same type or kind than the incoming events described above.

The object of the invention is also achieved by a method to process information, especially to establish a communication via a telecommunications web site (TCW) comprising the steps of: identifying an incoming event and processing information, especially establishing a communication, in a manner depending from the kind of identified event. With such a method, a communication may be established via a telecommunications web site (TCW) more efficiently and individually than it is possible with a telephone or an ordinary e-mail system. Identifying an incoming event preferably means to detect the signal of the event, to receive the signal and to analyze the signal. Preferably, the origin of the signal is determined. Thus, the event for instance carries the information from which part of the EIE the signal comes from.

The object of the invention is also achieved by a computer program product, including program code portions for carrying out the steps according to the method described above.

The object of the invention is also achieved by a telecommunications web site (TCW) wherein the telecommunications web site (TCW) has an event creating element (ECE).

The event creating element (ECE) is preferably a set of hard- and software consisting of one or more core engines that create events based on the current state of the system and rules for transitions to the next state of the system. In a preferred embodiment the core engine is a CORBA (common object request broker architecture) service.

In a further preferred embodiment of the present invention, the event creating element (ECE) is adapted to create an event of the group of a modification of the layout of the web page of the telecommunications web site (TCW) presented to the caller or the specific entity, retrieval information, the presentation of a predefined functionality, sending information to a user/signalling, queries to the caller to (fully) identify the caller, internal/ external feedback, notification, authorization, especially authorization to download data, any other events described above, starting a specific software, or a combination thereof.

Such an event can be a server based or client based event like generating a letter by printing, putting into an envelope, stamping and placing in a post office, news data, stock exchange data, sending the information that someone is calling the TCW, e.g. the ringing of an end user unit like a telephone, the signalling via a web browser based software acoustically or visually. Such outgoing events from a client or a server could be generated as a time-based outgoing event. Such a time-based outgoing event is for instance a birthday, scheduled e-mails or any kind of messages, especially UMTS messages, anniversaries, etc. Further, events may be processed-based outgoing events. Such events could for instance be the result of calculations of data, the result of a search within data bases or the internet, the result of comparison of information, comparison of documents, etc. In addition, the events could be based on incoming events. For example, such incoming-based events may be programmed expectations or scheduled expectations of incoming events or a combination of incoming events, which will automatically create outgoing events. For instance, the arrival of a fax in combination with the status of the home fax being busy will send an outgoing event to redirect the fax to another fax machine or to the fax storage. Thus, the event of the incoming fax as well as the event of indicating that the home fax is busy together are the event to redirect the fax. Preferably, the event is a cluster of events, especially of different classes. Thus, any combination of events can be used. With this combination the use of different services like for instance services of a telecommunication portal and very individual settings can be used. Thus, an outgoing event may be an UMTS message with a warning for closing the windows as soon as news were received from the telecommunication portal including the word "storm" and within a given timeframe there is an incoming weather forecast fax. As a result, very individual outgoing events can be defined dependent on very individual clusters or combinations of (incoming or internal) events. Preferably, the outgoing events include the same kind and types of incoming events, especially signalling, notifying and displaying of SMS, e-mails, faxes, voice messages and any other types of messages. Further, there may preferably be timer-based or automatic actions, for instance, sending of an absence notification. In addition, outgoing events may be uploading data in a data base, transmitting information to another server/ client or a specific end-user unit.

An event may be a notification, signalling, alert, etc. as described above with respect to the incoming events. Further, an event may be the kind the telecommunications web site is displayed to a visitor or caller. Thus, the telecommunications web site may be modified in ist display by an outgoing event created by the event creating element ECE. For instance, the telecommunications web site presented to a caller may display only specific content or options to communicate with the host of the telecommunications web site. In that case, a respective event created by the event creating element ECE modifies the layout of the telecommunications web page displayed to the visitor and for instance allows only for fax and e-mail correspondence. Another event may modify the display of this layout by opening a window asking the visitor to confirm the authorization to access the web page of the telecommunications web site by entering a password or a keyword. Such a keyword may be a topic which again may lead to another event modifying the layout displayed to the visitor exactly to display the content of the topic identified.

The event may also be an event that modifies the layout presented to the host of the telecommunications web site. The web page presented to the host may for instance be modified to show the old correspondence with a person calling the web site. Thus, the event creating element modifies the layout of the web page presented to the host of the TCW by showing the old correspondence with a person that is in this moment calling the TCW. Such retrieval information to be displayed may also include additional information on the person calling, historic data information like all events, reports of all communications and the like as well as the link to this information. Such retrieval information is preferably stored in a individual protocol data base (IPD).

In an individual data base (IDB), personal data, specific filters, for instance blacklists to avoid calls from certain parties, groups of users, addresses and telephone numbers may be defined and stored. Further, the data may include data on contract details, billing information or accounting specification. Preferably, such an individual data base (IDB) is integrated into a telecommunications web site.

Further, an event may also be the presentation of a predefined functionality of a web page of the telecommunications web site. Such a predefined functionality may be the option to forward an incoming call to another end user unit or telephone number. Such a forwarding function could be provided by a button displayed on the layout of the web page. The event would then initiate the web page to alter its layout and to show this button or to activate this button with this certain functionality. For example, on an incoming call, the event creating element may create an event to activate a forward button for an incoming call. The host of the telecommunications web site may then be able to select and push this button (preferably on a browser-like software) and thus to forward the call to a predefined number. Other functionalities may include updating of the data bases, exchange of files, especially MP3-files or picture files, hanging up on a specific caller, redirecting a call to an answering machine, etc. Further, information may be retrieved to start any possible program stored and installed on a server or a client. This information will be updated. For example, a specific word processor software is loaded when a call from a party is received of which the information is retrieved that this party uses this software.

Preferably, an event is initiated which updates data between the caller and the host of the TCW. For instance, such data may be personal data like address changes of both parties, even the transfer of entries of address books, MP3 files or picture files to be exchanged, etc.

Further, it is especially preferred to create a cluster of events by the event creating element (ECE). With a cluster of events, several events independent from each other may be initiated and created that may in this combination fulfil several aspects. For instance, it is possible to create a cluster of events to notify the host of the telecommunications web site that a specific person called, to redirect this person to a specific predefined number, to modify the layout of the telecommunications web page of the TCW presented to this specific caller, to store specific protocol data into the individual protocol data base IPD and to inform a third party of this call. Further, the cluster of events may include the group notification of a group of users or the forwarding of this call to a group. This forwarding can be effected via fax, e-mail, SMS, voice message, data, etc. Even if a person calls via telephone, this call may be recorded and transformed into text that can be forwarded using a fax, an e-mail or a text file.

Preferably, the telecommunications web site (TCW) has also an event identifying element (EIE). With this telecommunications web site it is possible to use both advantages of a TCW with an event creating element ECE and an event identifying element EIE. Thus, dependent on the identified event, outgoing or internal events created by the event creating element may be initiated. Thus, the combination of both the event creating element and the event identifying element allows for using both events as criteria for the telecommunications web site to react to incoming or outgoing calls.

Preferably, the TCW is adapted to allow for the predefined event created by the event creating element (ECE) dependent on the identity of the caller and/ or the incoming event identified by the EIE:

Especially preferred is a communications environment, comprising at least one telecommunications web site (TCW) according to the present invention. Preferably, a communications environment comprising at least one telecommunications web site (TCW) on a telecommunications portal (TCP) is provided.

The object of the invention is also achieved by a method to create an event (especially establish a communication) via a telecommunications web site (TCW) comprising the steps of: identifying an incoming event; creating an outgoing event; and establishing the communication in a manner depending from the kind of the identified event.

Further, the object of the invention is achieved by program code portions for carrying out the steps according to the method of the invention.

The object of the invention is also achieved by a telecommunications web site (TCW) wherein the telecommunications web site (TCW) has a caller recognizing element (CRE).

With such a CRE, the caller of a TCW may be identified. For instance, this can be achieved by receiving and interpreting an ISDN-signal related to the telephone number of a telephone calling the web site. Preferably, a data base storing the information of the telephone number is used to identify the person behind the telephone number. On the other hand, more complex interpretation of more than one signal may be employed in order to recognize and identify the calling party.

In a preferred embodiment, the caller recognizing element (CRE) is adapted to use information of a data base to recognize a caller of the telecommunications web site. Such a data base may store information on telephone numbers associated to certain parties, store information on historic data of the owner of the TCW such as a history of former calls, the kind of end user unit used by the calling party, the time and date of the call, etc. Altogether, this data forms a profile of the specific calling party. Such statistic data or retrieval data may be used to identify the calling party. Preferably, the data base comprises an individual data base (personal data, black lists, groups, etc.) and/ or an individual protocol data base (historic data). Further, biometrical data, personal identification numbers, ip-addresses may be stored in such an individual protocol data base. The IP-address is especially preferred in case a VoIP-connection is to be established. Further, the IP-address is preferred if the end user unit used by the calling party has an IP-address of its own.

Preferably, the (retrieval/ statistic) data base is an expert system. Such an expert system is adapted to learn from former events and may draw conclusions with respect to future events fitting into a certain set of parameters. Such an expert system is a computer application that performs a task that would otherwise be performed by a human expert. For example, there are expert systems that can diagnose human illnesses, make financial forecasts, and schedule routes for delivery vehicles. Some expert systems are designed to take the place of human experts, while others are designed to aid them.

Expert systems are part of a general category of computer applications known as artificial intelligence. To design an expert system one needs a knowledge engineer, an individual who studies how human experts make decisions and translates the rules into terms that a computer can understand.

The most widely used knowledge representation scheme for expert systems is rules (sometimes in combination with frame systems). Typically, the rules won't have certain conclusions - there will just be some degree of certainty that the conclusion will hold if the conditions hold. Statistical techniques are used to determine these certainties. Rule-based systems, with or without certainties, are generally easily modifiable and make it easy to provide reasonably helpful traces of the system's reasoning. These traces can be used in providing explanations of what it is doing.

Expert systems have been used to solve a wide range of problems in domains such as medicine, mathematics, engineering, geology, computer science, business, law, defense and education. Within each domain, they have been used to solve problems of different types. Types of problem involve diagnosis (e.g., of a system fault, disease or student error); design (of a computer systems, hotel etc); and interpretation (of, for example, geological data).

Preferably, the data for the expert system originate from the communications data of the user of the TCW and/ or data from the telecommunications portal TCP. Such data from the TCP may include information originated by the services and resources of the TCP, warning lists, etc.

Preferably, the caller recognizing element (CRE) is adapted to progressively recognize a caller of the telecommunications web site. With such a weighted or graded recognition, several pieces of information may be combined to even more ensure the identity of the calling party. This information or data may be combined one after the other thus increasing the probability that the identity of the calling party is recognized correctly.

Further preferably, the caller recognizing element (CRE) is adapted to parallely use information to recognize a caller of the telecommunications web site. Thus, different pieces of information may be used at the same time to recognize a calling party. Most preferably, the data will be used progressively and parallely as well. With a combination of these two approaches, the calling party may be recognized extremely fast and with a high hit rate. For instance, the CRE may use the data originating from the device used by the calling party, may compare this data to data in a historic data base of former calls and parallely retrieve data on the date and time of the call and compare this to data in the historic data base as well.

Preferably, the caller recognizing element (CRE) is adapted to use passive information like type of the calling device, type of software used by the caller, especially type of browser used by the caller, provider of the caller, time and date of the call, place of the caller, especially the GPS-coordinates of the caller, configuration of the device of the caller, especially computer configuration of the caller, type of processor used, operating system, IP-address, UMTS address, ISDN address, TCW information, TCP information, RAM-configuration, hardware configuration or a combination thereof.

Preferably, the caller recognizing element (CRE) is adapted to use proactive information like cookie information, information of a TCW, information of a TCP, information of a user-tracking software or a combination thereof.

Preferably, the caller recognizing element (CRE) is adapted to use interactive information like a password entered, a subject or a keyword entered, data on a chip-card, biometric information, especially voice data, fingerprints, structure of the eye, spectrum of the skin, genetic information or a combination thereof.

Preferably, the caller recognizing element (CRE) is adapted to determine a probability of the caller being the identified caller. With such a probability, the TCW may then provide rules that refer to this value of probability. This probability may be displayed to the host of the TCW - it may be in the host's discretion to act accordingly.

Preferably, the telecommunications web site (TCW) further has an event identifying element (EIE) and/ or an event creating element (ECE). Thus, the TCW may benefit from the combination of all these elements. Preferably, the TCW may also comprise an individual event settings data base (IES). Thus, the data used when identifying the calling party may be identified by the EIE and then passed to the CRE. Further, the CRE may pass a value of the probability of the identity of the calling party to the individual event settings data base. This data base may provide a rule being processed dependent on the value of this probability and then pass a signal to the ECE to create an event according to the applied rule.

Most preferably, the telecommunications web site (TCW) allows for an event dependent on a probability determined by the caller recognizing element (CRE) of the caller being the identified caller. Such a predefined event may be an internal event like the modification of the display of the TCW or an outgoing event like the signalling or notification or even the display of an Input box to the calling party to (fully) identify the calling party.

The object of the invention is also achieved by a communications environment, comprising at least one telecommunications web site (TCW) with a CRE, especially when comprising at least one telecommunications web site (TCW) on a telecommunications portal (TCP).

In a further preferred embodiment of the communications environment according to the present invention the telecommunications web site (TCW) is adapted to provide for direct private communications in a manner depending from data characterizing the first end user unit (EUU1). Thus, the TCW can establish a communication dependent from the specific end user unit employed to establish the contact. If a telephone is used as EUU1, the TCW may provide for the SE to establish a communication with another telephone or a mailbox, etc. If the EUU1 used is a fax machine, the TCW may provide for the SE to establish communication with another fax machine, scanner, computer, etc.

In a preferred embodiment of the communications environment according to the present invention, the manner of the direct private communications and/ or the data characterizing the first end user unit (EUU1) is predefined by the specific entity (SE). Thus, the SE can predefine how the TCW may react to a specific type of end user unit. As a result, the communications environment can be personalized and defined more specifically to the needs of the person behind the SE, i.e., the host of the TCW.

In particular, the specific entity defines its own individual telecommunications web site including, for example, indications which data are to be provided via the telecommunications web site to which accessing end user unit, how communications links are to be or can be routed to an accessing end user unit (e.g., via the Internet or a telephone network), the handling of received communications (e.g., returning delivery confirmations or response communications) and security constraints (e.g., which kind of communications is allowed, what type of network has to be employed by the accessing end user unit and which communications formats and protocols are to be used).

Further, it is preferred to allow the calling party to input a password to fully confirm the identity of the calling party.

The object of the invention is also achieved by a method for identifying a calling party of a telecommunications web site (TCW) comprising the steps of:
receiving a signal of an incoming call
retrieving data from a data base, especially using data from the telecommunications web site (TCW) (like time and date) and/or using data from the signal of the incoming call and/or using data from an event identifying element (EIE); and/or
using data originating from passive information and/ or proactive information and/ or interactive information
using data progressively and/ or parallely
determining the probability of the call being originated by a certain party. Thus, it is possible to identify a calling party even if the caller is using a personal computer or a browser software.

Preferably, the method further comprises the step of:
having the calling party enter a password to confirm the identity of the calling party. Thus, it is possible to fully identify the calling party on request.

Preferably, the method further comprises the step of:
creating an event dependent on the determined probability of the call being originated by a certain party. Thus, it is possible to react individually to a specific calling party. For instance, the layout of a "welcome page" of the telecommunications web site may be altered to reflect content suitable for the identified caller.

Preferably, the method further comprises the step of:
creating an event dependent on predefined individual event settings (IES). Thus, events may be used that are stored before the contact.

The object of the invention is also achieved by a computer program product, including program code portions for carrying out steps according to the aforementioned methods.

The object of the invention is also achieved by a telecommunications web site (TCW) that has an individual event settings element (IES). With such an individual event settings element (IES) it is possible to define rules and to store these rules. These rules refer to events to be created dependent from certain parameters available for the TCW.

Such rules may include any incoming, internal and/ or outgoing events combined logically. Especially a user-defined schedule, serving as a condition to trigger any combination of events is feasible as a rule. Rules may define events that are to be created as soon as certain sets of criteria are satisfied. Such sets of criteria may include any combination of events connected to each other. Especially, these events are connected via logical operators like AND or OR or NOT, etc. The user of the telecommunications web site TCW may then define these rules of the event settings element. For instance, the user may define the following rule: check the phone bill after terminating any phone call. If the phone bill exceeds EUR 1,000 then notify me via SMS to a certain number. Thus, the termination of the phone call is an outgoing event triggering the TCW to check on the phone bill and then to discriminate whether the phone bill is already exceeding EUR 1,000 or not. In the first case, an SMS notification is sent to the user.

The event settings element preferably may be a data base application installed on a computer device like a server. Here, all data and information on the individual settings and rules may be stored.

Preferably, the telecommunications web site (TCW) has a caller recognizing element (CRE) and/ or an event identifying element (EIE) and/ or an event creating element (ECE). With these elements, the TCW may use a large variety of different incoming events to be identified being usable to serve as a parameter used in the rules to be stored and processed in the individual event settings element (IES). Further, all different kinds, of outgoing events may be defined that can be created. Preferably, these events include events directed to or coming from a portal, especially a TCP. Further, these events preferably refer to a UMTS network.

The object of the invention is also achieved by a communications environment, comprising at least one telecommunications web site (TCW) with a CRE, especially when comprising at least one telecommunications web site (TCW) on a telecommunications portal (TCP).

The object of the invention is also achieved by a method for identifying a calling party of a telecommunications web site (TCW) comprising the steps of:
identifying an incoming signal in an event identifying element (EIE)
passing this signal to a caller recognizing element (CRE)
identifying a calling party originating the incoming signal using data stored in data bases of the telecommunications web site (TCW)
passing the data on the identity of the calling party to an individual event settings element (IES)
determining rules from the individual event settings element (IES) that satisfy the given parameters
creating an event in an event creating element (ECE) dependent from the rules determined.

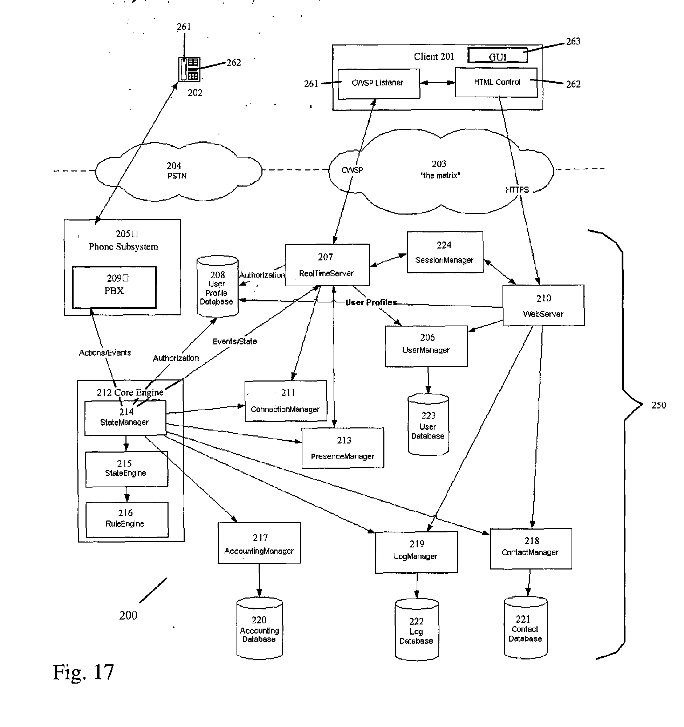

Advantageous embodiments are described in context with figure 17 and examples 1 to 5.

The object of the invention is also achieved by a computer program product, including program code portions for carrying out steps according to the aforementioned methods.

The object of the invention is also achieved by a telecommunications web site (TCW) wherein there are different zones (Z) provided for a layout, preferably an output layout, of a web page of the telecommunications web site (TCW). These different zones of the layout may facilitate organization of the magnitude of information that can be used and controlled by a single telecommunications web site. Thus, with several zones in a layout of a telecommunications web site, the telecommunications web site is easier to handle and to control. Such zones are preferably areas in a layout presented to the visitor of the telecommunications web site, either as a calling party or as the host of this telecommunications web site.

Preferably the zones (Z) comprise a signalling zone (SIZ) and/ or a real-time zone (RTZ) and/or a controlling zone (COZ) and/ or a settings zone (SEZ) and/ or an interactive zone (IAZ) and/ or a personal data zone (PDZ) and/ or a personal portal zone (PPZ) and/ or a personal homepage zone (PHZ) and/ or a video conferencing zone (VCZ).

The signalling zone (SIZ) is a zone in which the status of the connection may be visualized. Thus, the signalling zone may comprise tags to be displayed in the signalling zone giving the status of a certain connection. For example, the signalling zone could display tags like "precall is being established ...", "connecting ...", "no connection", "dialing", "call waiting", "knocking", "on hold", "retry in x seconds", "retrying", "forwarding", "talking to answering machine", etc.

Further, the signalling zone may comprise optical elements like a colored flashing area indicating that somebody is calling, using different colors for different states of the connection, etc. For instance, a yellow light may blink in the signalling zone when a call is waiting, a green light may be used when a connection was established, etc. Preferably, the signalling zone is just one line of text high.

Further, the telecommunications web site of the present invention may include a real-time zone (RTZ). In the real-time zone, actual data being processed at this very moment can be displayed. For instance, the person calling the web site is being displayed with the name and the calling telephone number. Further, the status is given. A status may be "online", "disconnected", "on hold", "in conference", "mute", "offline", "connected", etc.

Further, the real-time zone may comprise several buttons offering certain functionalities like "connect to", "add to conference", "show history", "add to contacts", "send message (e-mail, SMS, UMTS message, etc.), "invite to chat", etc.

Further, the real-time zone may display information on waiting calls, conference call members, etc.

Preferably, at least one of the zones is a controlling zone (COZ). With such a controlling zone additional information can be displayed which may be used to establish a connection. Such information may include addresses, especially address lists, most-used addresses, addresses of people that are currently online, groups of addresses like family, friends, colleagues, etc. Further, the controlling zone may comprise functionalities displayed preferably by a button. Preferred buttons are buttons showing the online status of the party connected to the telecommunications web site, opening a chat window, a button to show certain communication partners that were contacted most frequently by the user of the telecommunications web site, i.e. a so-called "show most used"-button, a button showing communication partners who are online, i.e. a so-called "show online"-button, a button showing groups of communication partners, preferably predefined by the user of the telecommunications web site, i.e. a so-called "show groups"-button, a button on which the most recently used communication partners are displayed, i.e. a so-called "show most recent used"-button, other buttons to select the person to be called, for instance a "jump to (ABC)"-button, by which persons can be selected according to the alphabet, a button with which a new contact or address can be added, removed or contacted, a button to sort data entries like for instance the table of the history, i.e. the data entries of former contacts to a certain person or all the persons contacted. Such sorting may provide for sorting by different data fields like type, from, to, subject, date, etc.

Further, the zones preferably comprise a settings zone (SEZ). In such a settings zone the rules of the individual event settings data base may be defined. Such a settings zone may comprise functionalities like time-based change of user profiles, preferred number of the host of the telecommunications web site, caller-based change of user profiles, etc. The profiles may contain any rule/ action in order to have an automatic virtual operator. Such a "virtual operator" function may enable the user of a telecommunications web site to define rules that make the TCW to act like an operator. For instance, the user may define to redirect calls from a certain party to a specific mobile telephone within the next two hours whereas all other calls are redirected to the mailbox. Thus, the settings may be chosen like the instructions for a secretary managing the communication of this specific person.

Preferably, an interactive zone (IAZ) is comprised in a telecommunications web site. In such an interactive zone or messaging zone or exchange zone files may be exchanged between the calling party and the host of the telecommunications web site. Preferably, it is possible to offer the exchange of files like MP3 files, picture files, text files, etc. Further the interactive messaging zone may be used as a "whiteboard". Thus, in the interactive zone the user can draw and paint using predefined forms like rectangles, triangles, circles or paint free-hand style scribbling something in the interactive zone leaving it to the other party to interpret the meaning of this painting. Most preferably, the parties connected via the telecommunications web site may use the interactive zone to jointly use programs, especially software programs like word processor software, spreadsheet software, etc. The parties may also choose to watch movies in the interactive zone or listen to music, for instance from MP3 files. Further, the parties may choose to use the interactive zone to chat and input text via their keyboards.

Preferably the zone comprises a personal data zone (PDZ). In the personal data zone files of the user or the host of the telecommunications web site may be stored. In these personal data zones friends or people with access to the telecommunications web site may display or store data files or documents. The parties may use the personal data zone to exchange MP3 files, pictures, any user documents, etc. Preferably, the private zone is used to define and set special rights for different users and user groups to access these files, to read, to amend, to write, to edit, etc. these files as well as the folders used to organize these files.

Preferably, the zone comprises a personal portal zone (PPZ). In this personal portal zone, the user of the telecommunications web site may display data and content of services that are available via the telecommunications portal. For instance, the host of the telecommunications web site may display the latest news on a soccer game, stock market information, etc. on this personal portal zone. Further, the information of the portal may include:
Advanced search: internet search for information using advanced search functions; Search: high-speed search of the entire directory of a portal for a search word; Directory: (German language) web pages edited and sorted by more than 36,000 categories; Communication Chat: chatting, flirting or obtaining information - with WEB.DE Chat; FreeMail: free e-mail, fax, SMS, voice messages, telephone calls via the internet; Mobile phones: allows for downloading of logos, ringing tones, test reports, etc. for mobile phones; Calendar: a handy meeting and task organizer; Newsgroups: about 1,200 German news groups, clearly sorted; SmartSurfer: access to the internet using the cheapest rate; TrustCenter: encoding of mails and digital signature guaranteeing a safe use of the internet; WAP: extensive WAP directory, access to WAP services and important information; Wake-up call: wake-up call at a predefined time; Aktie.web.de: obtaining information on WEB.DE shares and the Company; Stock market: up-to-date stock market information, share indices, share performance comparison etc.; Soccer tips: free price draw with attractive prices for the German premier league; Horoscope: finding out about the future; Reporter: up-to-date, regular and individually tailored news via e-mail -; Headlines: the most important news items and topics of the day; Sport: the entire world of sports, covering everything from soccer to tennis, to Formula 1 and much more; TV Program: providing quick overviews and the weekly program; Weather: up-to-date weather reports including forecasts on pollen counts, ozone and UV-levels; Entertainment Comics: daily comics and cartoons of all varieties, also for e-mail distribution; Greeting cards: greeting cards, poems and jokes for every occasion and every taste; Logos & Ringing Tones: Customizing a mobile with logos and ringing tones; Lottery-by-Mouse-Click: the daily chance to become a millionaire - free!; Radio: the best hits on the internet, plus links and interesting tips on surfing the net; Roadwork Service: up-to-date information on roadworks on roads and highways; Download: providing more than 17,000 programs for 10 platforms; Registration Service: registering an e-mail in the WEB.DE directory; Protection of Minors: protecting all web sites with erotic content from unauthorized access by minors; MyShirt: ordering T-shirts or the like with a print of your FreeMail address or a design of your choice; Route Planner: Europe-wide route planner with important additional information; Traffic Jam Alert: up-to-date information on locations and extent of traffic jams; WEB.DE Lottery Service: 24-hour lottery service; Web-Guide: interesting information concerning the internet for both beginners and experts; Consumer Subscription Service: the intelligent way to subscribe to your favorite magazine; Catalogues: 1,500 catalogues at your fingertips; Paybox: shopping online and pay via mobile phone - safe and easy; Installment credits: comparing credit terms of various credit institutions; Shopping: allowing for online shopping and includes guidelines on online shopping and online law; Telephone rates: the ultimate tool for finding the cheapest telephone rates.

Further, the zones preferably comprise a personal homepage zone (PHZ). On this personal homepage zone the host of the telecommunications web site may present his own homepage either by link or with a full content. On this personal homepage anything that can be found on homepages built with HTML may be displayed, i.e. pictures, text, macromedia flash elements, lyrics, reviews, public chat, link collections, animations, movies, MP3 files, games, Java applets, Java programs, Java script functionality, etc.

Further, it is preferred to have a video conferencing zone (VCZ) on the telecommunications web site. With such a video conferencing zone it is possible to show the people taking part in a video conference. Preferably, the pictures of the people are arranged in a row in the video conferencing zone. Thus, it is possible to integrate the members of a video conference very easily by using a telecommunications web site.

Preferably, the video conferencing zone is adapted to provide for a zooming function. With such a zooming function the user of the telecommunications web site may choose to zoom in or out specific persons taking part in the video conference. Thus, it is possible to enlarge the picture of a specific partner in the video conference. Most preferably, the video conferencing tool is adapted to automatically zoom in on the person that is speaking at the moment. Thus, it is easier to follow the video conference talk since the image of the person speaking at the moment is enlarged. Further, it is preferred to display the persons in a highlighted way. Such highlighting may be a frame, colored background, blinking, etc. Thus, the user of the telecommunications web site may easily distinguish the person speaking from the rest of the participants in the conference talk.

Preferably, the telecommunications web site (TCW) is adapted to present a layout comprising different zones with different content to different calling parties of the telecommunications web site. Thus, the telecommunications web site may differ from the content with respect to the different calling parties. Thus, a calling party may see exactly the information that the host of the telecommunications web site sees fit for this specific calling party. For instance, the host of the telecommunications web site may choose to display only the business contact information and the position of the host in the firm when a person belonging to a predefined "business group" is calling. However, if a family member calls in the same host may have decided to display a more personal content and offer to download the pictures of the last holiday. Thus, the host of the telecommunications web site is enabled to show "different faces to different people". In addition, the different zones may have completely different content in case the host himself is calling the telecommunications web site. In such circumstances, the telecommunications web site may display much more functionality and information than to any other calling party of the telecommunications web site.

Preferably, the telecommunication web site (TCW) is adapted to modify the layout as a response to an event. With the event and time triggered modification of the web site it is possible to answer the ongoing caller recognition or any other event. Preferably, if a calling party is not yet fully recognized, a minimum of content and/ or functionality may be displayed to the calling party. As soon as other events are recognized, identifying for instance a calling party, more individual data for this calling party may be displayed. If for instance an unidentified calling party accesses the telecommunications web site a blank page with only one button to hang up may be displayed. However, the more information the retrieval system gathers about the calling party, the more information can be displayed on the different zones of the telecommunications web site layout. In the end, a window may be displayed to the calling party to confirm their identity by entering a password or answering a specific question that only people from a certain group can know. As a result, the calling party may be presented with the full content that the host predefined to be displayed to a member of this group or this particular person.

The object of the invention is also achieved by a communications environment, comprising at least one telecommunications web site (TCW) with a CRE, especially when comprising at least one telecommunications web site (TCW) on a telecommunications portal (TCP).

The object of the invention is also achieved by a method using a telecommunications web site (TCW) adapted to allow for inputting data wherein the inputting of data is writing, drawing, painting, typing, pushing a button, talking, uploading data or a combination thereof. With the inputting of data into the telecommunications web site, interaction between the parties using this telecommunications web site can be accomplished. Thus, parties may communicate and interact via the telecommunications web site. Preferably, the inputting of data is accomplished by touching, especially touching a screen.

Writing can be accomplished by using a pen. This pen preferably is connected to the input media or end user unit like a painting pad. From there, the writing, preferably with a specific pen, is transmitted to an input media like a computer device displaying all movements of the pen on this drawing pad directly on the screen.

Drawing preferably is inputting data other than written text like figures, drawings, specific forms, freehand drawing, etc. For instance, a party communicating via the telecommunications web site with another party may draw a scheme how to access a specific site like a hand-drawn map. Preferably, the inputting tool for drawing on the telecommunications web site also offers a tool for inputting specific forms for drawing automatically. Thus, the party inputting a drawing may choose to use a rectangular form or a circle or a triangular form, etc. With this form the party preferably chooses the size of the form to be drawn and may even use this form in the telecommunications web site immediately.

Preferably, the painting is used to input data into a telecommunications web site. With painting freehand style schemes and sketches a party communicating via the telecommunications web site may very easily use figures and drawings made by hand to illustrate a certain aspect that otherwise could only be expressed in a more time consuming manner. Preferably, colors are also usable to illustrate certain aspects in these drawn figures of the painting.

Preferably, typing is used to input data in the telecommunications web site in order to communicate with another party. Especially when inputting data via a computer device typing text into a keyboard may be the easiest and most common way to input especially text into the telecommunications web site. Further, special keys on the keyboard may be predefined to allow for certain functionalities that can be executed by pressing only one key. Also, short keys can be used where a combination of keys to be pressed on the keyboard allow for certain other functionalities or special symbols. For instance, a key may allow for inputting a footer or a predefined form letter into the inputting area of a telecommunications web site.

Further, pushing a specific button may be used to input data into a telecommunications web site. Such a button may be a switch on the desk of the user of the telecommunications web site. Such a button may be programmed to allow a certain functionality to be executed. Such a functionality may be a simple "yes" or "no" to be input to the other party of the telecommunications web site and thus allow for a very fast and effective way of communication where only short decision are necessary as for instance with ordering at the stock market, etc.

Talking is also a preferred way of inputting data into a telecommunications web site when communicating. Preferably, the words are transformed into text and this text is input and displayed on the telecommunications web site. Thus, a person may choose to use a voice recognizing system to input data into the telecommunications web site. Preferably, this voice recognizing system installed on the telecommunications web site thus allowing the parties to input data by talking.

Uploading of data is also a preferred way of inputting data into a telecommunications web site. Thus, prepared text files or MP3 files or PDF files, etc. - any data containing files - may be uploaded and input into the telecommunications web site. Thus, the telecommunications web site allows for presentation of prepared documents or other data files to the other party. Such files may include drawings, text, music data, picture files, etc. Other ways of inputting data may be the use of joysticks, trackballs, a mouse, pedals, a special TCW-keyboard, electronic instruments (e.g. synthesizers, keyboards).

Preferably, the inputting of data is accomplished bi-directionally. Thus, the data may be put in by both parties and transmitted to the other party, similar to a conventional chat. The data is now not only put into the telecommunications web site but also transmitted to the other party. Thus, it is possible that both parties may write and edit a certain text and then exchange the text files via the telecommunications web site. It is also possible to have a communication via a telecommunications web site like an ordinary e-mail communication - however, the communication takes place via the telecommunications web site and not via any mail server. Further, one party may choose to write into the telecommunications web site via a respective pad whereas the other party may choose to talk and input data via voice to the telecommunications web site. With this bi-directional inputting of the data both parties may choose their preferred way of inputting data.

Preferably, the inputting of data is displayed in real-time. With such a method the data may be transmitted and displayed to the other party immediately and thus allow for a conversation in real-time. One party choosing to input data by using a pad may be immediately presented with the answers of the other party that chooses to input data via voice. Thus, a real-time communication is established via the telecommunications web site. Preferably, this displaying the data in real-time to the other party is accomplished by a dedicated protocol for TCW client-server or client-client communication.

Preferably, the inputting is accomplished into one document at the same time. With this method it is possible that both parties can communicate referring to a specific document at the same time. For instance, both parties may be connected via a PSTN network using telephones via the telecommunications web site. Both parties may simultaneously have access to the internet via a computer device and display a document to each other. At the same time where both parties discuss the content of this document via telephone, they may simultaneously highlight certain passages or paragraphs of the document in color and thus show the other party the specific detail in the document they are referring to. Thus it is possible to have documents on the telecommunications web site both parties can use to demonstrate and display to the other party. This is accomplished by providing this data file on the telecommunications web site. Thus, both parties may communicate as if they were using a document on the same table highlighting certain paragraphs and pointing out certain areas, for instance, a text file a picture file, a music file, etc. to each other. Preferably, the parties may be able to display more than one document to each other. Thus, it is possible to refer to a certain specification as a text file and certain drawings as figures to explain certain aspects of a technical device. Most preferably, the document can be highlighted by both parties but only edited and saved by one party. Thus, one party has the power and authorization to alter the document whereas the other party may "only" have read-only access to the document.

Preferably, the inputting of data is accomplished interactively. With such an interactive inputting of data both parties may be in a position to edit, for instance a text file, simultaneously. At the same time both parties may alter the text of these text files. This functionality is for instance known in local area networks for text processor software. With the telecommunications web site editing of documents is not only limited to a specific word processor software but may be accomplished for various types of files. Thus, both parties may edit a specific text file, for instance in different chapters, simultaneously and add text to this file. Further, the parties may add music files, for instance MP3 files, to one data file or insert drawings, pictures, etc. to data files. Thus, the parties may interactively edit one document without having to wait for the other party to grant access to this document. With such a way of communication interaction between the parties is much enhanced. Especially in combination with the multi-media or multi-protocol communication, i.e. the communication via different media or different protocols, for instance PSTN network, internet, video communication, etc. At the same time this communication allows for a very complex and fruitful communication between parties. Most preferably, this way of communicating is not limited to two parties.

The object of the invention is also achieved by a computer program product, including program code portions for carrying out steps according to the aforementioned methods.

### Short description of the figures

In the following description of preferred embodiments of the present invention, it is referred to the accompanying drawings, wherein:
- Fig. 1:: illustrates direct private communications between a first end user unit and a specific entity via the telecommunications web site according to the present invention,
- Fig. 2a to 2d:: illustrates four basic schemes according to which participants of the communication can be connected via a telecommunication web site;
- Fig. 3:: illustrates an embodiment of the communications environment according to the present invention,
- Fig. 4:: illustrates a further embodiment of the communications environment according to the present invention;
- Fig. 5a and 5b:: illustrate two different ways in which participants of a communication can be connected via a telecommunication web site;
- Fig. 6:: illustrates the basic scheme, in which a participant A can communicate with a participant B using two different end user units that are controlled by the same TCW at the same time;
- Fig. 7a and 7b:: illustrates a basic scheme in which participants can communicate via one TCW or even two TCWs;
- Fig. 8:: illustrates an embodiment of the communications environment according to the present invention featuring a telecommunications web site portal;
- Fig. 9:: illustrates another embodiment of the present invention in which on one portal two telecommunication web sites TCW1 and TCW2 are provided;
- Fig. 10:: illustrates an embodiment of the communications environment according to the present invention including two telecommunications web site portals;
- Fig. 11:: illustrates a further embodiment of the present invention with two telecommunication portals TCP1 and TCP2 allowing communication between two participants;
- Fig. 12:: illustrates a scheme of a further embodiment of the present invention showing a telecommunications web site TCW with an event identifying element EIE;
- Fig. 13:: illustrates a scheme of a further embodiment of the present invention showing a telecommunications web site TCW with an event identifying element EIE and an event creating element ECE;
- Fig. 14:: illustrates a scheme of a further embodiment of the present invention showing a telecommunications web site TCW with an event identifying element EIE, an event creating element ECE and a caller recognizing element CRE;
- Fig. 15:: illustrates a further embodiment of the invention showing a layout of a web page of a telecommunications web site TCW;
- Fig. 16.01-16.11:: illustrates a row of pictures showing a layout of a further embodiment of the invention showing a specific layout of a web page of a telecommunications web site of the present invention;
- Fig. 17:: shows a schematic diagram of the architecture of an embodiment of the communication environment according to the present invention.

### Description of preferred embodiments

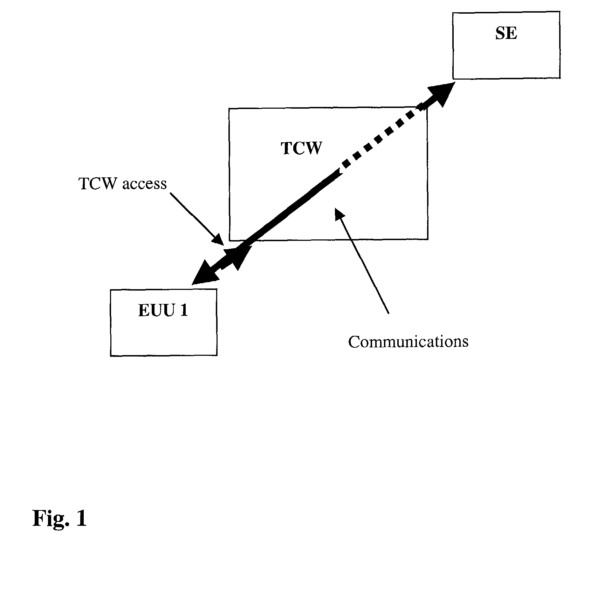

As shown in figure 1, a first end user unit EUU1 accesses a telecommunications web site TCW that in response thereto establishes a direct and private communications with a specific entity SE. The direct and private communications are only performed between the first end user unit EUU1 and the specific entity SE such that further parties cannot participate. As set forth above, the telecommunications web site TCW serves as a general-purpose communications interface or "window" which is illustrated in Fig. 1.

The first end user unit EUU1 can be embodied as single communications unit, like a stationary/ mobile telephone, fax device, computer system and the like. Further, in order to increase the communications capabilities, the first end user unit EUU1 can include more than one communications unit which can be individually used or used in parallel for accessing the telecommunications web site TCW and communicating via the telecommunications web site TCW.

As opposing communications party, the specific entity SE is primarily characterized as entity to which the telecommunications web site TCW is associated to, i.e., the telecommunications web site TCW is personalized for the specific entity SE. For addressing the specific entity SE and communicating therewith, the telecommunications web site TCW is accessed by the first end user unit EUU1 by means of an address-like identification uniquely indicating the telecommunications web site TCW and, thus, the specific entity SE. For example, a user of the first end user unit EUU1 enters address information characterizing the specific entity SE, e.g., a company or a person, to be contacted. On the basis of the provided address information, the telecommunications web site TCW is accessed and establishes in response thereto the direct and private communications with the specific entity SE, e.g., the company or person with whom communications are intended by the caller.

For communications purposes, the specific entity SE can include a single communications unit, like a stationary/mobile telephone, fax device, computer system and the like. Further, in order to increase the communications capabilities, the specific entity SE can be comprised of more than one communications unit which can be individually used or used in parallel for communicating via the telecommunications web site TCW.

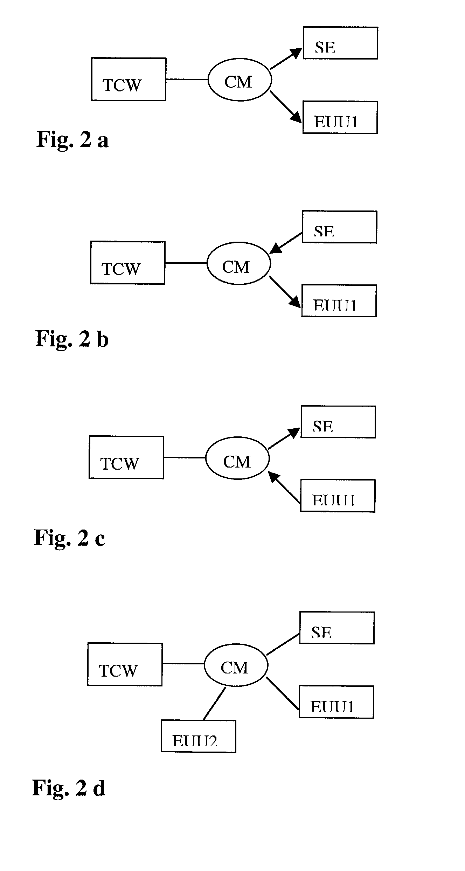

In **figures 2a to 2d**, a first scheme of communication between a specific entity SE and end user unit EUUU1 is illustrated. The TCW has connection means CM. The TCW is connected to the connection means CM and controlls these connection means CM. Such connection means CM can be an IP switch, an adapter, a gateway, etc. The connection means CM is adapted to provide and establish communication between SE and EUU1.

In figure 2a the TCW may initiate via CM a connection to SE and at the same time a connection to EUU1. Both participants SE and EUU1 are then connected via the TCW controlling the connection means CM. As an example, SE may access the TCW and choose the request to establish communication between SE and EUU1. SE may be using a telephone, EUU1 may be using a mobile telephone. TCW now controlles the connection means CM to initiate a call to the stationary telephone of SE and to initiate a second call to the mobile telephone used as EUU1. Further, the connection means CM connects both the call to SE and the call to EUU1. Both telephones of SE and EUU1 begin to ring. The specific end user having initiated this call via the TCW may now pick up his/her phone and be connected to EUU1.

In figure 2b, SE is directly accessing the TCW via the connection means CM. The TCW now establishes a connection via the connecting means CM to the first end user unit EUU1. Thus, SE as the calling party can connect to EUU1 via the TCW, i.e. the connecting means CM.

In figure 2c, end user unit EUU1 initiates the connection by calling the TCW. The TCW then initiates a call to SE via the connection means CM. Thus, EUU1 is connected to SE via the connection means CM controlled by the TCW. With this embodiment of the present invention it is possible for the end user using EUU1 to directly connect to SE via the TCW without having to bother, which end user unit SE is using.

In figure 2d, the basic scheme of the communication between more than two participants is illustrated. SE may now initiate calls and connections via the TCW to invite another end user using the end user unit EUU2 into the call. Thus, basic functions like conference call, switching, forwarding, rejecting, parking, etc. are possible. It may be the case that SE and EUU1 are in communications, when EUU 2 is calling SE via the TCW. SE may then choose to park EUU land to talk to EUU2 while EUU1 is holding the line. SE may then decide to invite EUU1 into a conference with SE and EUU2. Thus, a communication between three participants is estalished.

As a result, the TCW may work like a "virtual operator" using the connection means CM and establishing a communication path between several participants of the communication. SE as the owner of the TCW may then decide which party to invite into the communication and which party to reject. Since the connection means may comprise not only switches like IP switches or switches in the PSTN network, but also gateways and protocol translators, the TCW may be used as a virtual operator to establish all kinds of communication connections.

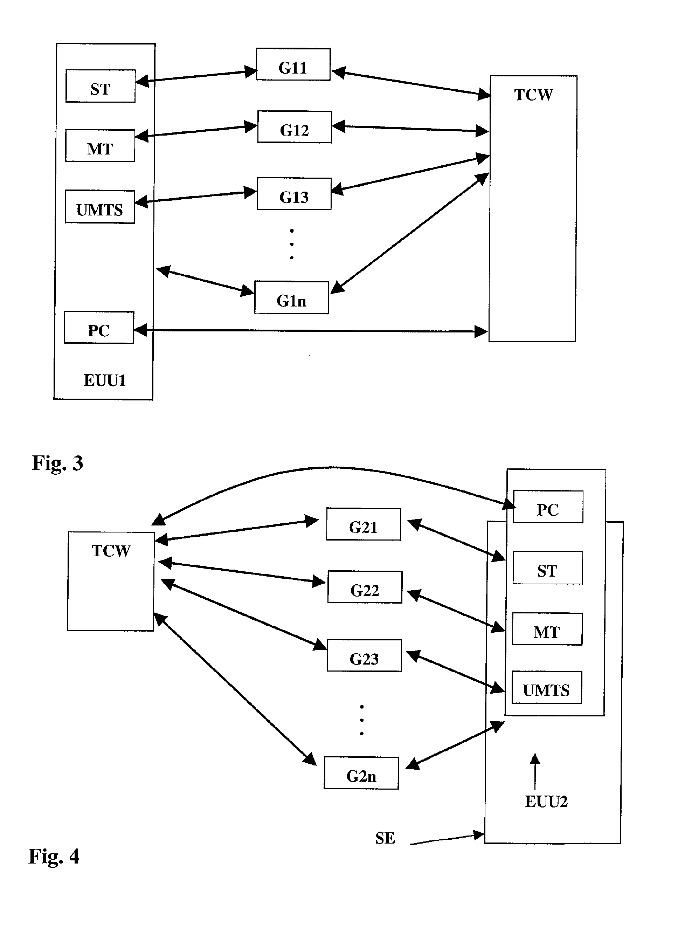

For accessing the telecommunications web site TCW and communicating via the telecommunications web site TCW, as shown in **figure 3**, the first end user unit EUU1 can use a direct communications link, e.g., over the Internet in the case where both the first end user unit EUU1 and telecommunications web site TCW are serviced by the Internet. Where the first end user unit EUU1 is a communications unit adapted for and/or serviced by a network different from a network the telecommunications web site TCW is relying on (here the Internet), respective gateways G11,..., G1n are used.

In particular, referring to figure 3, a gateway G11 is employed for telecommunications web site accesses and communications for a first end user unit EUU1 including a stationary telephone ST serviced by a PSTN network, while a gateway G12 is employed for a first end user unit EUU1 including a mobile telephone MT serviced by a mobile communications network. The number of gateways G11,..., G1n is not limited and will primarily depend on the type of the first end user units EUU1 and communications devices used.

In a comparable manner, as shown in **figure 4**, communicating via the telecommunications web site TCW with respect to the specific entity SE, a direct communications link can be used, e.g., over the Internet in the case both the specific entity SE and telecommunications web site TCW are serviced by the Internet. Where the specific entity SE is a communications unit adapted for and/or serviced by a network different from a network the telecommunications web site TCW is relying on (here the Internet), respective gateways G21,..., G2n are used.

Referring to figure 4, a gateway G21 is employed for telecommunications web site TCW accesses and communications for a specific entity SE including a second end user unit EUU2 comprising a stationary telephone serviced by a PSTN network, while a gateway G22 is employed for the second end user unit EUU2 comprising a mobile telephone serviced by a mobile communications network. Again, the number of gateways G21,... , G2n is not limited and will primarily depend from the type of the specific entity SE used and the communications devices comprised.

For example, where both the calling party (first end user unit EUU1) and the called party (specific entity SE) communicate by means of a personal computer, they communicate via the telecommunications web site TCW of the specific entity SE by means of a visual display on their personal computers which looks like, in appearance, like a web page. In contrast to a conventional web page, the telecommunications web site TCW is accessed by both parties at the same time: information inputted on one side will be displayed on the other side as it is being inputted. For example, in the case of text inputted by one party, the other party will be provided, on its display, the text as it is inputted by the transmitting user. Thus, in contrast to a conventional E-mail system, neither the sending party nor the receiving party is required to perform any interaction to transmit or receive, respectively, communications data.

Where both the first end user unit EUU1 and the specific entity SE communicate by telephone, communications will also be executed via the telecommunications web site TCW. In view of the restricted information display capabilities of a telephone, i.e., in general only the transmission of voice data optional with low resolution graphic data, such communications will appear as a conventional telephone conversation optional accompanied by visual information on one or both telephone displays - with the essential difference that communications are executed via the telecommunications web site TCW.

The impact of communications via the telecommunications web site TCW will be more evident for the case of communications between the first end user unit EUU1 utilizing a telephone and the specific entity SE communicating by means of personal computer. For example, a calling user associated with the first end user unit EUU1 intending to communication with a user associated with the specific entity SE, here from a telephone to a personal computer, accesses the telecommunications web site TCW of the user to be contacted by providing the respective address information via the telephone. In response thereto, the telecommunications web site TCW connects to the personal computer of the called user and, thus, establishes a communications link between the two users. For actually communicating, both users utilize the respective end user units, i.e., the telephone and the personal computer, in a conventional manner while the telecommunications web site TCW interfaces between the different types of end user units.

As a result, the telephone user will, in general, communicate by means of voice transmissions, while the personal computer user will receive communications in form of visual displays and transmit communications by inputting respective data into the personal computer. Optionally, the telephone user can operate keys of the telephone to input communications data and can be provided visual information on the telephone's display, both options being rather restricted in view of the capabilities of telephones. Further, the personal computer user can input and receive acoustic data if using respective units (e.g., headsets). Nevertheless, the way both users operate the respective end user unit is not dependent from the end user unit of the other party. Rather, both users operate their end user units in a conventional manner, whereas, in contrast to conventional communications, different technologies are merged without specific interaction required to be performed by the users.

With respect to routing of communications links, the telecommunications web site TCW allows to use different networks in parallel and/or in series to perform communications. For example, in the case of video conferencing, the telecommunications web site TCW routes any data which can be visualized on a monitor data link suitable for video data (e.g., a computer/Intemet-based network) while voice data will be communicated over a telephone network. As a result, the participating parties will benefit from the technical properties of the telephone network optimized with respect to a transmission voice data and from the quality of visual data transmission via a link designed for that purpose. Further, the participating parties are released from the burden to control transmission links for different data/content. Rather, the telecommunications web site TCW automatically selects, depending on the data to be transmitted, a suitable network. Since all data routing is automatically performed inside the communications environment, there is no need to use different end user units for data being transmitted via different communications links. For example, in the case of video conferencing, the participating parties can use personal computers equipped with a video camera and visual and acoustic display devices as integral end user units and, thus, will transmit and receive integral communications data, while, in contrast to the front end appearance of the performed communications, the different communications types are executed by means of separate networks.

In addition to a universal integration of different communications networks and end user units, the telecommunications web site TCW allows for an individual communications control for each party that is presently available for neither Internet-based communications nor conventional telephone communications. Known Internet-based and telephone network-based communications environments provide for standardized interfaces and standardized communications functionalities, both of which offer a limited range of modification possibilities for different users.

Also, the definitions for the telecommunications web site TCW can include indications how communications are to be routed to and/or from the first end user unit EUU1 and/or specific entity SE, e.g., via which gateway and/or which network communications will be executed to provide e.g., for personal computer-based communications, telephone-based communications, etc. Thus, it can be defined that particular end user units are allowed to communicate with the owner of the telecommunications web site TCW, i.e., the specific entity SE, on the basis of a computer-computer-link only, while other end user units are also allowed to communicate to/or from telephones.

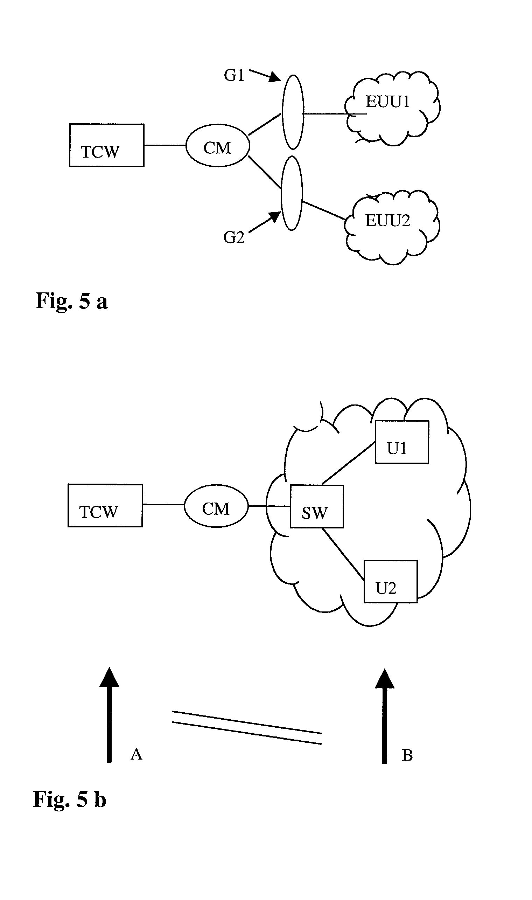

In **figures 5a and 5b**, possible configurations of connections are illustrated that are controlled by a TCW.

In **figure 5a**, end user unit 1 of a PCTN network wants to connect to a user using end user unit 2. The user of the EUU1 calls the TCW via a gateway G1 and a connection means CM. The TCW then initiates a connection to EUU2 via the connecting means CM and a gateway G2 into the UMTS network in which EUU 2 is situated. The connection is controlled by the TCW controlling the connection means CM. In this case, the connection means is an iP-switch controlling the connection established via the gateway G1 to the PSTN network in which EUU1 is situated and the gateway G2 into the UMTS-network in which EUU2 is situated. Thus, a connection between two completely different networks can be established via a TCW. As soon as the connection is terminated by the host of TCW, the connection means will terminate the connection between EUU1 and EUU2. Thus, the host of TCW, i.e. the specific unit SE, is in control of the connection between EUU1 and EUU2.

In figure 5b, a similar scenario to the one in figure 5a is illustrated. In this case, a user U1 seeks connection to user U2 also situated in the same kind of network, here a PSTN network. User U1 contacts the TCW. The TCW establishes a connection via the connection means CM controlling a switch SW and establishes a second connection to the user U2. These two connections to U1 and to U2 are then connected by the switch SW in the PSTN, i.e. a PSTN-switch. Again, the TCW is in total control over the connection between U1 and U2. If for instance the host of the TCW, that is the specific entity SE, accesses the TCW (indicated by arrow A) the specific entity may at the same time use the end user unit of U2, e.g. a telephone talking to the user U1 (indicated by arrow B). Thus, the specific entity may control the connection via the TCW and communicate with U1 by using the telephone U2. When choosing to terminate the connection, the specific entity may either terminate the connection by choosing so in the TCW accessed for instance by a browser. The specific entity may also terminate the connection by hanging up the telephone U2 and thus terminate the connection to U1. Further, the specific entity may choose to change the kind of end user unit he or she is using, i.e. U2 and connect via the TCW to another end user unit and continue the communication with U1.

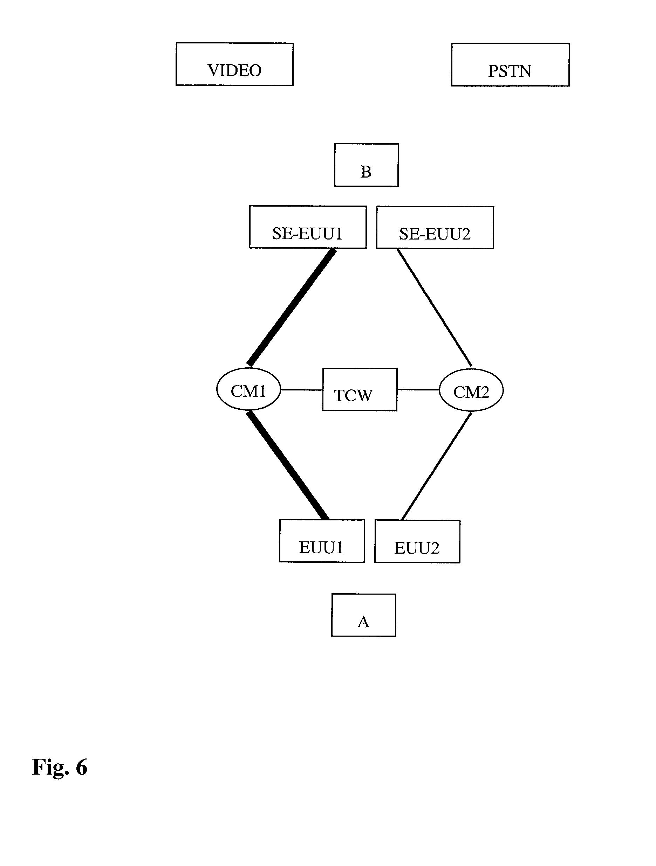

In **figure 6**, a schematic scheme is illustrated in which a person A communicates with a person B via a TCW using two different end user units EUU1 and EUU2 at the same time parallely. EUU1 connects via the TCW and the connection means CM1 respectively, to the end user unit SE-EUU1 of a specific entity B. At the same time, the participant A may connect to participant B with an end user unit EUU2 via the TCW and a connection means CM2, respectively, to an end user unit SE-EUU2 associated to B. The connection means CM1 may connect via TCP/IP video devices and monitors EUU1 and SE-EUU1 whereas the connection means CM2 is a PSTN-switch connecting a telephone EUU2 with another telephone SE-EUU2. With such an arrangement, a multimedial chain can be established with two different media channels, i.e. a video channel and a telephone channel. The person A may now be connected to the person B by telephone via a PSTN network. This connection is controlled by the TCW via the connection means CM2. At the same time, the video picture is transmitted via TCP/IP controlled by the TCW via the CM1. Thus, person A may speek to person B without any delays in the voice transmission via a PSTN network whereas the picture is transmitted via TCP/IP in a sort of acceptable service of quality with respect to the video pictures. Both communication channels are controlled by the same TCW and may be routed according to costs, quality of service, or other parameters critical for this kind of communication. In another preferred embodiment, a third and/or a fourth channel is established using additional media to communicate, for instance a fax machine, a UMTS decvice, a web page, etc.

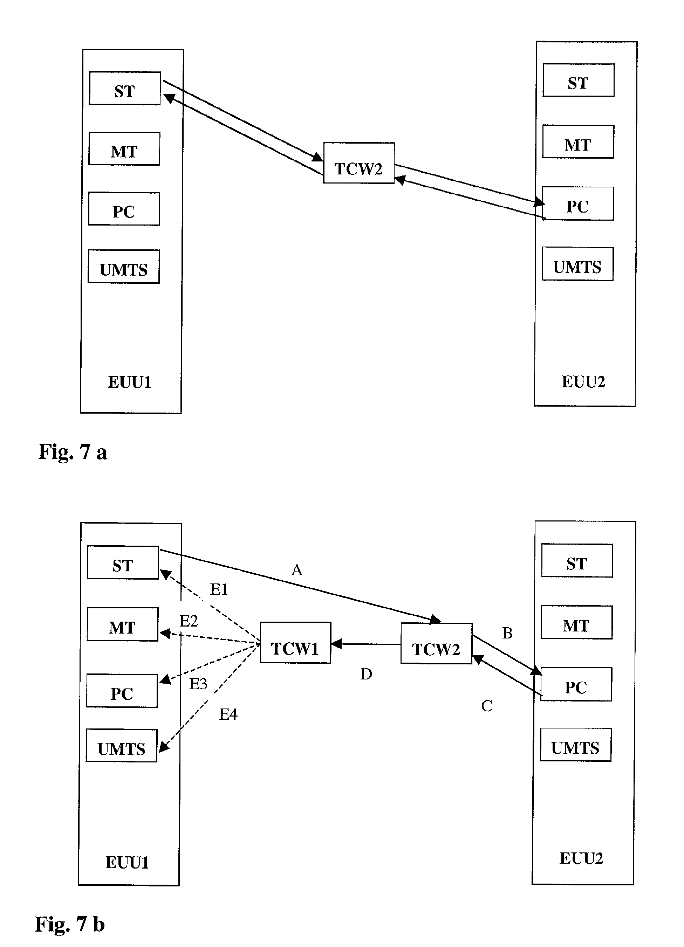

In **figures 7a and 7b**, a schematic scheme of a communication via one and two TCWs is illustrated.

In figure 7a, an array of end user units EUU1 as well as an array of end user units EUU2 is illustrated. EUU1 comprises end user units like a stationary telephone ST, a mobile telephone MT, a personal computer PC and a UMTS device UMTS. The user 1 calls with the stationary telephone the TCW. The TCW recognizes the request to be connected to the user EUU2. Thus, the TCW establishes the connection to the PC as end user unit of user 2. The PC as end user unit EUU2 responds via the TCW to the stationary telephone as EUU1.

In figure 7b, the user 1 uses the stationary telephone ST as end user unit EUU1. In step capital A, ST contacts the TCW2. The TCW2 recognizes the request to contact user 2 and connects in step B user 1 to the PC as the end user unit EUU2. In response, the PC contacts TCW2 in step C. TCW now contacts TCW1 in step D. TCW1 is associated to the specific entity of user 1 using the end user unit EUU1. Since both TCWs use the same protocol, the TCW1 shares the information with TCW2, which end user units EUU1 are available. Thus, the connection may now be established according to step E1 to the stationary telephone ST, according to step E2 to the mobile telephone MT, according to step E3 to the personal computer PC or according to step E4 to the UMTS as end user unit EUU1 of user 1. This information is available because the two TCWs TCW1 and TCW2 share the information of the associated end user units with each other. Thus, the communication can integrate different end user units on both sides.

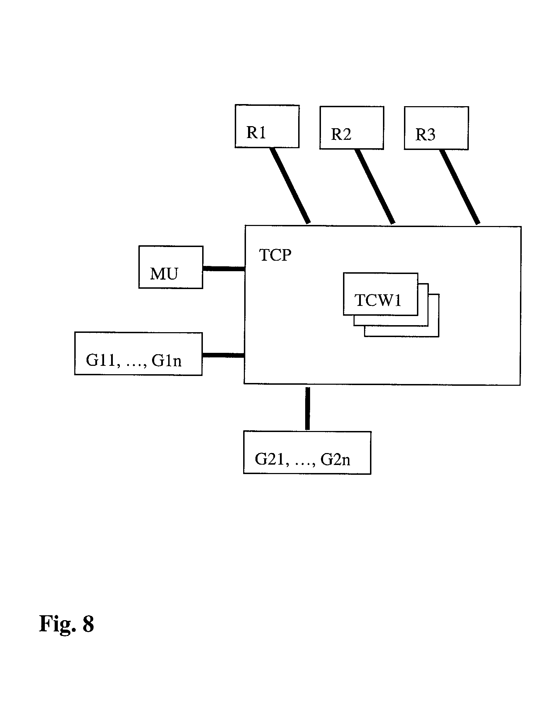

For providing the telecommunications web site TCW, a portal P shown in **figure 8** can be operated which serves as a physical location whereon the telecommunications web site TCW resides. This allows for an enhanced communications rate or speed since data/information to be communicated are not required to be transmitted between separated or even remote locations. Rather, all communications are exchanged through the telecommunications web site TCW like passing a window. Further, the portal P is responsible to provide the telecommunications web site TCW in a manner compatible to the first end user unit EUU1 and the specific entity SE actually used. In addition, the portal P can control the compliance with definitions of the telecommunications web site TCW e.g., on the basis of a memory unit MU associated to the portal P and the telecommunications web sites TCWs residing thereon, respectively, and including telecommunications web site definitions. Also, the portal P can communicate with the gateways G11,..., G1n and G21, ..., G2n to route communications links to the first end user unit EUU1 and the specific entity SE in dependence of its types and/or respective definitions for the telecommunications web site TCW.

Further, the portal P has different resources R1, R2 and R3. R1 is a content managing system in which news contents, calendar functions, entertainment services and other content services of a portal P are provided. The resource R2 is a special high-speed gateway to the PSTN. The resource R3 is an optical fibre connection to three other portals (not shown in the figure). Thus, the telecommunication web site TCW may use all resources R1 to R3, the memory unit MU and the gateways 1 and 2 provided by the portal. In addition, all other telecommunication web sites residing on this portal are able to use these resources. All the communication web sites of this portal P are residing on the same server. Thus, communication between these telecommunication web sites on this portal P is very fast and enhanced since the speed of communication between these web sites and the speed with which data exchange can take place is extraordinary high. MP3 data files, picture files, text files and other data may be exchanged between the specific entities of the different telecommunication web sites on this portal P very quickly. Further, the telecommunication web sites on this portal P communicate with a common protocol. Thus, they share certain information of the specific entities of these telecommunication web sites automatically. New data entries of the specific entity in its telecommunication web site are exchanged automatically. For instance, the new address of a specific entity amended in its own telecommunication web site will be communicated to all other telecommunication web sites in this portal on accessing these web sites. Thus, communication between the telecommunication web sites of the same portal P is enhanced.

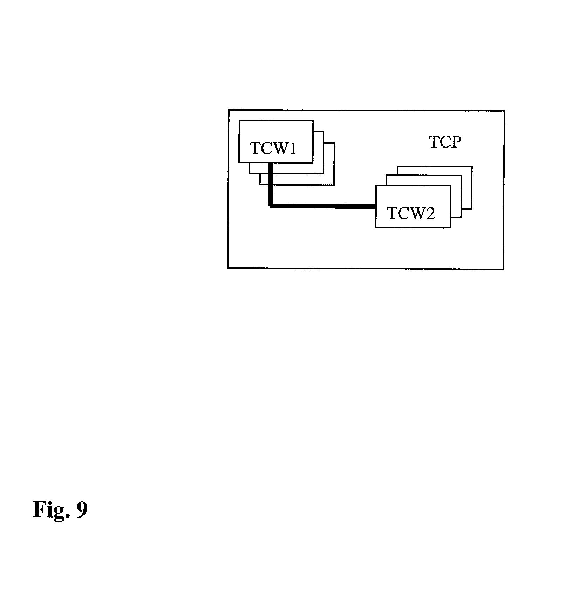

In **figure 9** the communication between two web pages TCW1 and TCW2 on the same portal TCP is illustrated. In this portal TCP, the telecommunication web site TCW1 is connected to the TCW2 by an optical fibre. Thus, the TCW1 may communicate with TCW2 much faster than two other telecommunication web sites not residing on the same portal TCP. These other communication web sites may have to use the internet or a PSTN network to communicate. Thus, a two telecommunication web sites TCW1 and TCW2 residing on the same portal TCP may communicate in a much enhanced way.

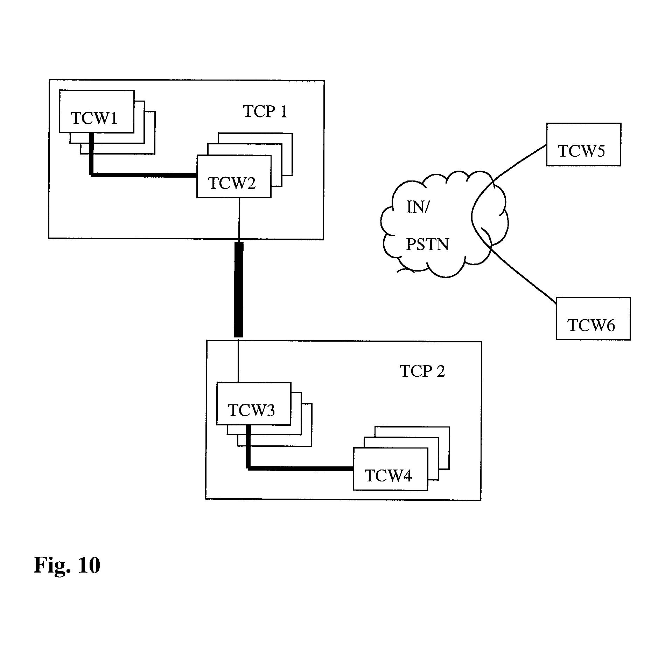

In **figure 10** two portals TCP1 and TCP2 are illustrated. The telecommunication portal TCP1 has the telecommunication web sites TCW1 and TCW2. The telecommunication portal 2 has telecommunication web sites TCW3 and TCW4. Both portals TCP1 and TCP2 are connected by a high-speed link. This high-speed link enables the two portals TCP1 and TCP2 to communicate in a very privileged and fast way. TCP1 and TCP2 use the same protocol chosen from a common list of protocols with which also the information of the telecommunication web sites residing on each of the portals TCP1 and TCP2 is exchanged. Thus, TCW2 connecting to TCW3 knows from the data exchange according to the protocol between the telecommunication portal TCP1 and TCP2 all necessary information of the specific entity associated to TCW3 automatically. This information is shared according to the common protocol between the communication portals TCP1 and TCP2. Thus, not only the communication between TCW1 and TCW2 is privileged because residing on the same portal TCP1. Further, also the communication between the telecommunication web site TCW2 and TCW3 is privileged since they are both supported by the common protocols used by the telecommunication portal TCP1 and TCP2. Thus, the communication between TCW2 and TCW3 is more advanced, faster and more privileged than for instance the communication between a telecommunication web site TCW5 with a TCW6 via the internet IN or a PSTN network PSTN, also illustrated in figure 10.

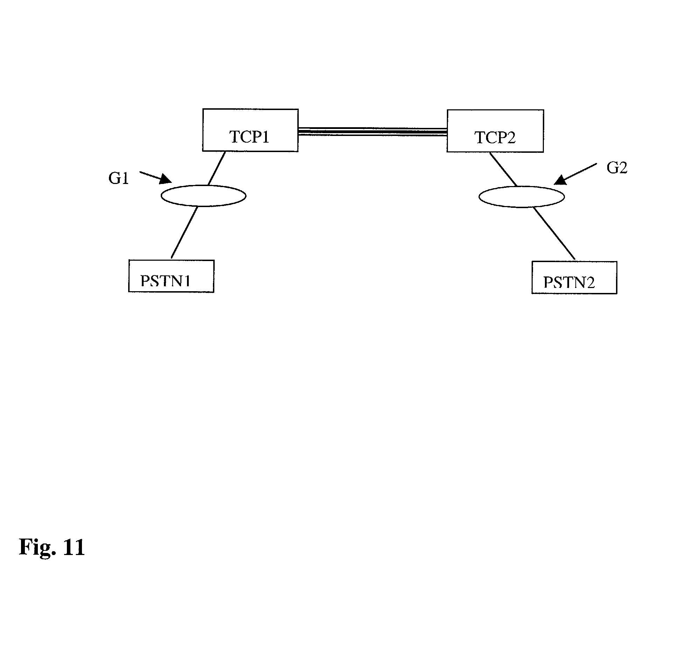

In **figure 11**, two portals TCP1 and TCP2 are connected by a high-speed linkage. Both portals TCP1 and TCP2 are communicating according to a common protocol. This linkage allows for synchronous communication. This means, that the communication has no delay that would cause a human being to be irritated. Thus, a human being may be able to communicate by voice via the linkage between the telecommunication portal TCP1 and TCP2 because there is no delay in the data information of the voice transmitted from TCP1 to TCP2 and vice versa. As a result, the user 1 using a device in the PSTN network PSTN1 may access a telecommunication portal TCP1 via a gateway G1 and request for a connection to user 2 using a device within the PSTN network PSTN2. This PSTN-network PSTN2 is connected to the telecommunication portal TCP2 via a gateway G2. Since both telecommunication portals TCP1 and TCP2 are connected to each other with this high-speed link, the user 1 may now communicate with the user 2 in the PSTN-network PSTN2 in a real-time manner without delays in the transmittal of the voice. Keeping in mind, that the telecommunication portal TCP1 may be provided on a first continent and the telecommunication portal TCP2 may be provided on a different continent, two users may be connected by their access to the telecommunication portals via the gateway in a very handy manner. User 1 may contact its telecommunication portal TCP1 initiating a local call via the gateway G1. the same may true for the user 2 using PSTN2 to access the telecommunication portal TCP2. Thus, the users of the local PSTN-networks may only pay for accessing the respective portals TCP1 or TCP2, respectively. However, they do not have to pay for the connection between TCP1 and TCP2. Thus, both users U1 and U2 using the PSTN-networks PC1 and PSTN2 may be connected from continent to continent both only having to pay for their local calls. Thus, a very cost effective communication with a high quality of service is established.

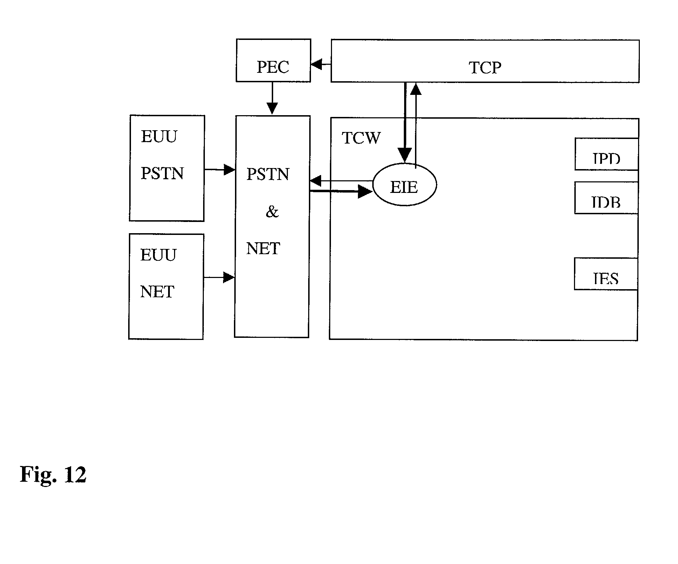

**Figure 12** illustrates a scheme of a further embodiment of the present invention showing a telecommunications web site TCW with an event identifying element EIE.

A telecommunications web site TCW has an event identifying element EIE. Further, the TCW has access to an individual protocol data base IPD, an individual data base IDB and an individual event settings data base IES. In the individual protocol data base IPD protocol data of former connections handled by the telecommunications web site TCW are provided and administered. Such protocol data may be the historic data of a connection with other parties like the date and the time of calls in the past, archives, in which former faxes, e-mails, notations and all other kind of communication data is stored. This historic data base IPD is adapted to provide all this information on former communications, connections or even the data on the try to establish a connection. In the individual data base IDB personal data of the host of the TCW is stored. Such personal data may be address information, definitions of groups grouping specific users or addresses, blacklists, telephone numbers, addresses but also personal files, MP3 files, pictures, text files, video files, etc. The TCW has access to this data of the individual data base IDB. Further, the individual events settings data base IES comprises definitions and settings of the host of the TCW in which the host defines certain rules, filters, etc. to automate certain features and processes within the TCW. Such settings may be the information to which telephone number the TCW shall connect an incoming call or how to notify the host of the TCW in case of a certain person belonging to a predefined group is sending a fax, etc.

The TCW of figure 12 is associated to a telecommunication portal TP. This telecommunication portal may host a lot of other telecommunications web sites (not shown in figure 12). The telecommunication portal may provide special portal services from which the TCW may benefit.

Further, figure 12 shows schematically a network PSTN and a network NET to which the TCW has access. This network may be an UMTS network, a PSTN network, a TCP/IP based network, an internet-based network, a radio network, etc. Further, there are end user units EUU also having access to the network PSTN or NET. These end user units EUU are split in figure 12 into end user units of a PSTN network EUU PSTN like telephones, faxes, SMS, WAP, e-mail, diverse telephone devices, UMTS/ 3G devices, etc. These end user units send signals to the network, especially to the PSTN network. Further, there are end user units EUU NET provided which send signals to a TCP/-IP network or other appropriate networks such as UMTS/ 3G devices, e-mail, diverse internet devices, signals from newstickers or newsgroups, the presence of a user or caller on a specific geographical point, alerts which are sent from these devices or the network, scheduled events that may lead to signals, voice over IP calls (VoIP calls). Further the telecommunications portal TCP may initiate via a portal event and call module PEC portal events and calls from the portal. Such portal events may be information of the status of other TCWs on the portal which are relevant to the TCW, information signals generated from events in the data bases of the telecommunication portal, especially the services offered by the telecommunication portal like information on the stock market, the personal horoscope, news, the broadcasting of a specific program etc. These events may be communicated to the TCW directly to the event identifying element EIE (shown by the direct arrow from TCP to EIE) or via the portal events and calls module PEC and via the PSTN/NET to the EIE.

In the end user unit EUU PSTN, e.g. a telephone, a call is initiated to the TCW of the host. Thus, a signal from this telephone is sent to the PSTN network. The PSTN network transfers this signal to the TCW. In the TCW, the signal is detected and recognized by the event identifying element. The event identifying element EIE identifies the signal as an incoming call from the telephone of the EUU PSTN. This information is transmitted to the TCW. The TCW may now on the basis of the settings within the individual event settings data base IES connect this call to a certain telephone number predefined by the host in case that another telephone of EUU PSTN would call. Thus, the TCW decides to establish a communication between the telephone EUU PSTN to a specific telephone of the host (not shown in Figure 12). This decision is made on the basis of the settings of the individual event settings data base IES.

In another example, the event identifying element EIE may redirect all incoming call to a specific number of the host on default. Thus, all incoming calls are redirected to a specific number disregarding whatever settings are provided in the individual events settings data base IES. In the further embodiment of the present invention, the host of the telecommunications web site TCW may decide while the call is coming in that the host wants to take the call right away to a different telephone. In this case, the host may overrule the predefined event that is to be initiated by the TCW because of the kind of event identified by the event identifying element EIE.

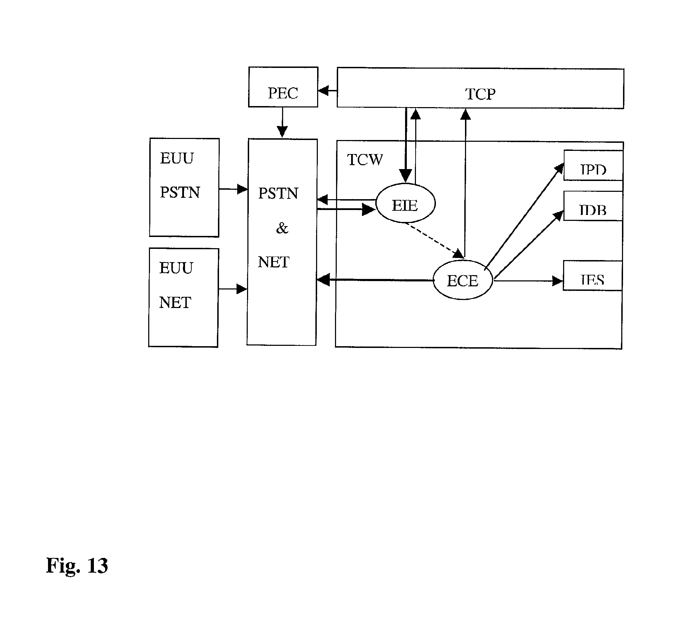

**Figure 13** illustrates a scheme of a further embodiment of the present invention showing a telecommunications web site TCW with an event identifying element EIE and an event creating element ECE.

This figure 13 basically contains all members and elements of figure 12 but additionally shows an event creating element ECE. This event creating element is adapted to create an event that is either an event outgoing to the PSTN & NET or to the TCP. Further, the event creating element ECE may generate events that are transmitted to the individual protocol data base IPD, individual data base IDB or individual event settings data base IES. The event creating element ECE may receive signals from the EIE thus being able to create an event dependent on an incoming event or any other event identified by the event identifying element.

As an example, the event creating element ECE may receive a signal from the event identifying element EIE that a telephone call is received. Now, the event creating element ECE creates an event modifying the layout of the web page of the telecommunications web site TCW thus generating a layout of the web page to the host of the telecommunications web site TCW indicating by for instance a blinking button that a telephone call is waiting. Further, the event creating element ECE may create a second event modifying the layout of the web page presented to the caller showing him a welcome layout with predefined content. Further, an event may be created on which an entry in the individual protocol data base is added and another event which may cause the individual data base IDB to produce the data connected to the calling party. Preferably, this information may be displayed to the host of the telecommunications web site TCW. The event creating element ECE may also generate a SMS message to be sent to a predefined telecommunication device signalling or notifying this person of the call received. Another event created may be the modification of the web page presented to the caller inviting the caller to update certain data like telephone books, entries into private data bases, files, especially MP3 files, etc. These events may also be dependent on other internal criteria like date and time, special configurations of the telecommunication portal, etc. Thus, it is possible to create clusters of events dependent on criteria from the event identifying element EIE, telecommunications portal TCP, individual protocol data base IPD, individual data base IDB or individual event settings data base IES.

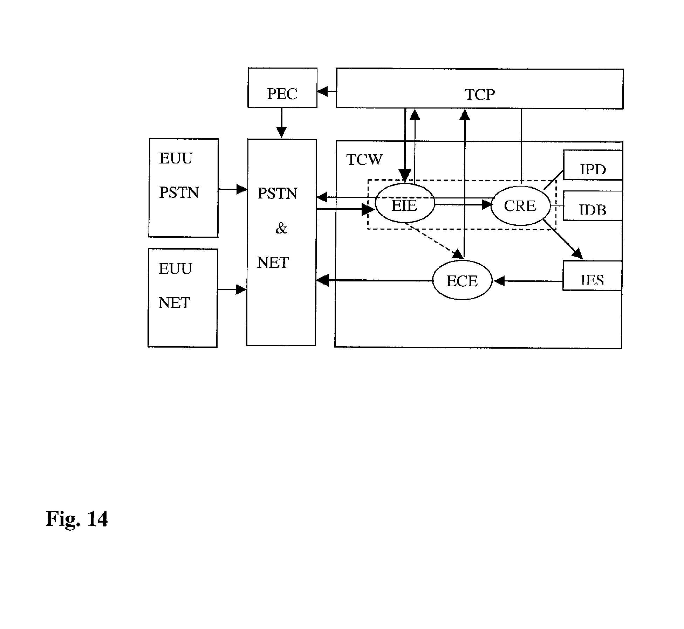

In **figure 14** a scheme of the further embodiment of the present invention is illustrated, showing a telecommunications web site TCW with an event identifying element EIE, an event creating element ECE and a caller recognizing element CRE.

This embodiment of figure 14 basically contains all elements of Figure 13 but additionally shows a caller recognizing element CRE. The caller recognizing element CRE is connected to the event identifying element EIE, the individual protocol data base for historic data IPD, the individual data base IDB and the individual event settings element IES. The caller recognizing element is connected to the event creating element ECE via the individual event settings element IES. Further, the caller recognizing element CRE is connected to the telecommunications portal TCP.

The caller recognizing element CRE is adapted to identify the calling party as a person. Whereas the event identifying element "only" identifies the event, the caller recognizing element CRE recognizes the person behind the incoming event. The caller recognizing element uses all different kind of data to recognize and identify the calling party. The caller recognizing element CRE uses the data transferred from the event identifying element EIE. If this data already contains the information of the calling party, the caller recognizing element CRE immediately renders a result. For instance, if the calling party is using a telephone via the ISDN protocol and transmits the telephone number, the caller recognizing element may immediately know the telephone number of the calling party. With a search in the individual data base the name and address of the person behind that telephone number is retrieved and the calling party is identified with a very high rate or probability. In a case where the event identifying element cannot render sufficient information to identify the person behind the incoming event, the caller recognizing element CRE will gather more information to find out about the calling party. For instance, a call via the internet does usually not use fixed TCP/-IP addresses. Thus, the incoming call cannot be identified by the mere TCP/-IP address. In such case, the caller recognizing element will try to add more information by checking the configuration of the computer used for the incoming call. This configuration of processor type, RAM configuration, software version used, etc. then is matched in the individual data base IDB and the individual protocol data base IPD against persons that used a computer of this configuration in the past. Further, date and time of the call may be matched to the calling behavior of persons from whom calls are stored in the individual protocol data base IPD. By these measures the probability of establishing the identity of a calling party behind an incoming event may be increased. The caller recognizing element may choose to display a window to the calling party prompting the calling party to input a keyword or a password. Thus, the caller recognizing element may fully identify the person calling the telecommunications web site TCW.

Preferably, the caller recognizing element and the event identifying element are integrated into one hardware and software module.

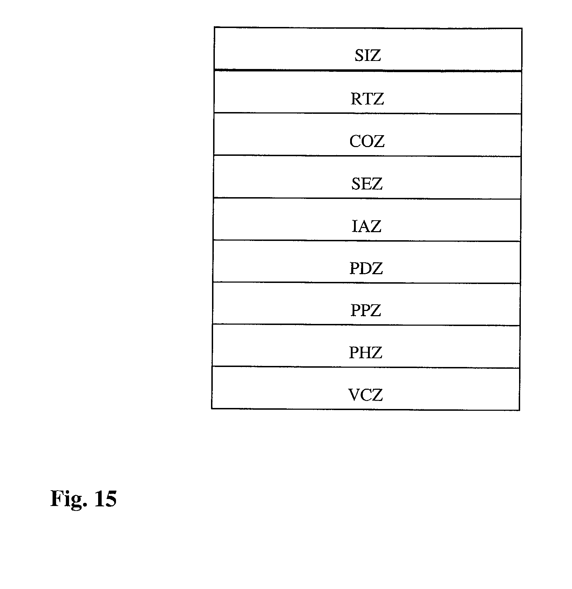

In **figure 15** another embodiment of the present invention illustrates a layout of a web page of a telecommunications web site TCW. This web page has different zones in which different content and different functionality can be provided and displayed.

The display and arrangement of the different zones may be adaptable to the medium with which the zones are going to be displayed. For instance, the zones may be arranged for easy use on a 640 x 480 screen of a personal computer or on a screen of a UMTS device.

In the signalling zone SIZ, the status of a connection is displayed.

On the real-time zone RTZ, the present user to be contacted may be displayed.

On the controlling zone COZ, several buttons may be provided to choose addresses or persons to be contacted.

The settings zone SEZ gives the user the opportunity to define certain rules applicable to certain situations.

In the interactive zone IAZ, an area may be provided in which a bi-directional real-time communication can take place and the users of the telecommunications web site or the calling party may interact with each other using the interactive zone. In this interactive zone, drawing, writing, uploading and downloading of files may take place. These events are preferably instantaneously witnessed by the other party of the communication.

In the personal data zone PDZ, personal files may be provided, especially for the host of the telecommunications web site.

Further, the personal portal zone PPZ may be provided in which services of the portal are displayed and used by the host of the telecommunications web site. This area may be displayed to the calling party and/ or the host of the telecommunications web site. The content may vary depending on the calling person. Thus, the calling party may find its horoscope being displayed since the telecommunications web site retrieved this person's date of birth from a retrieval data base. In the same personal portal zone PPZ a different content may be displayed to the host of the web site who, for instance, wants to be informed about the stock market performance of certain shares in his portfolio.

In the personal home page zone PHZ, links to the personal home pages of the different persons, especially the host of the telecommunications web site, may be provided. Further, content of this personal home page zone might be provided directly.

In the video conferencing zone VCZ, the functionality to set up and take part in a video conference may be provided. Thus, there are several areas in which the other partners of this video conference may be displayed. Most preferably, the person speaking at the moment is highlighted, preferably the picture of this person displayed is enlarged. Thus, it is very easy to follow the video conference even with more than two participants.

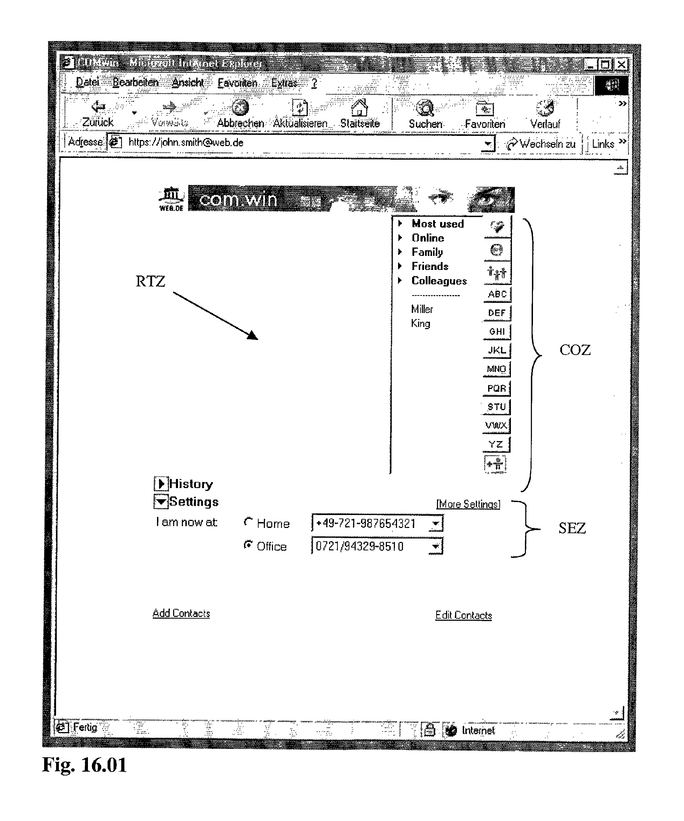

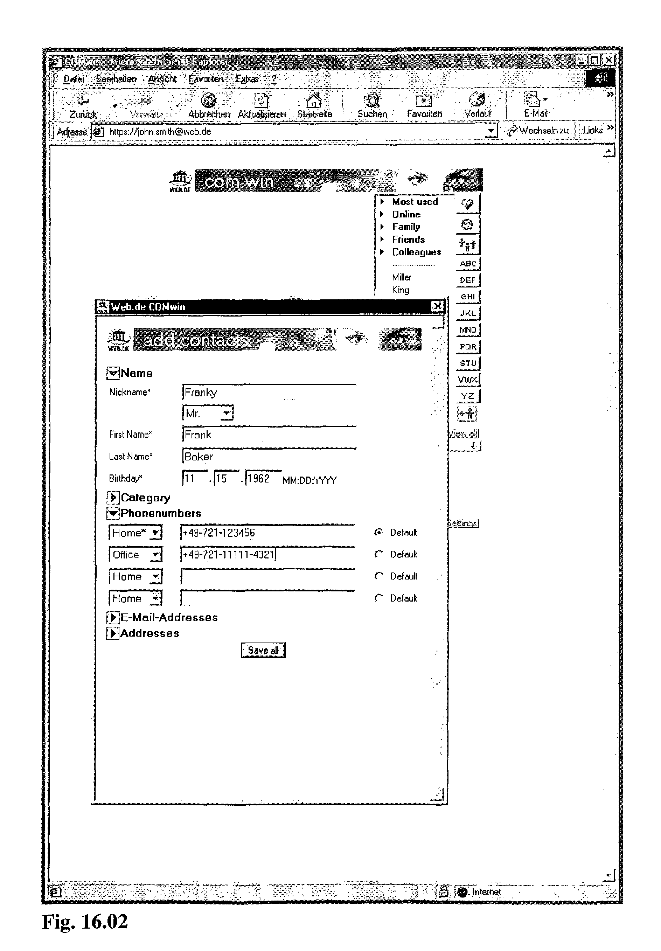

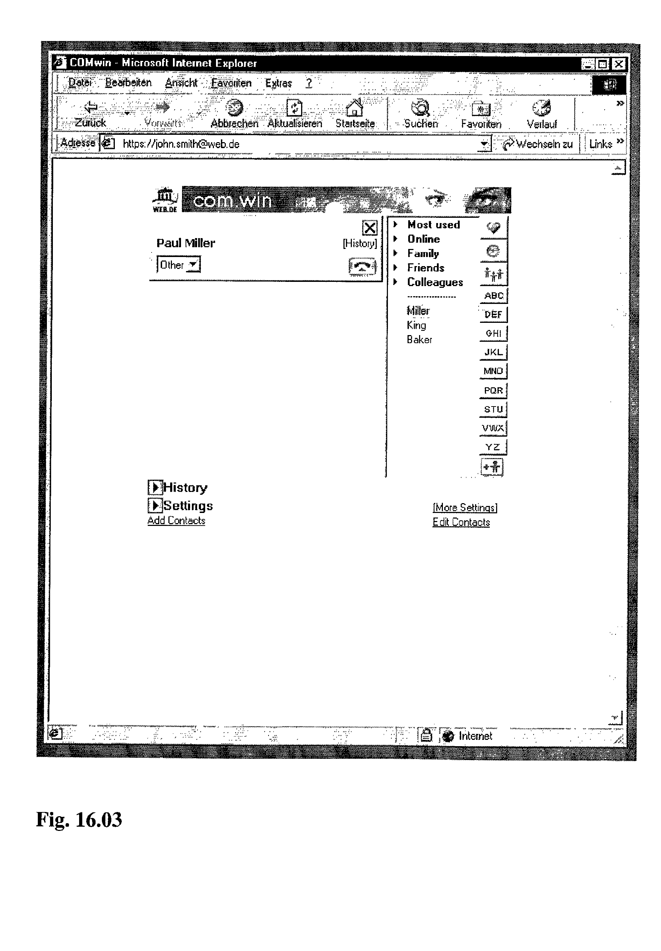

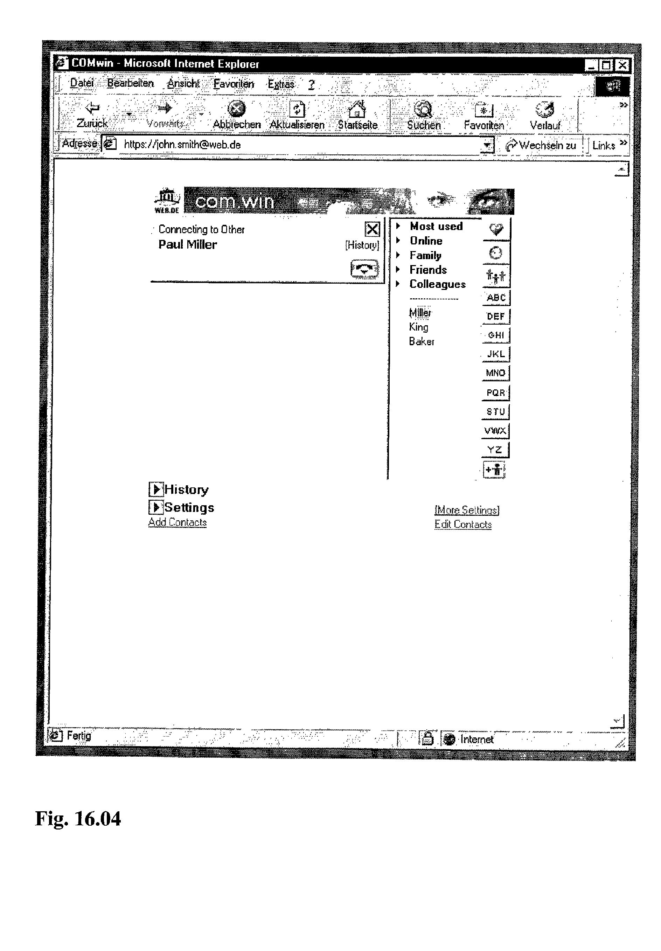

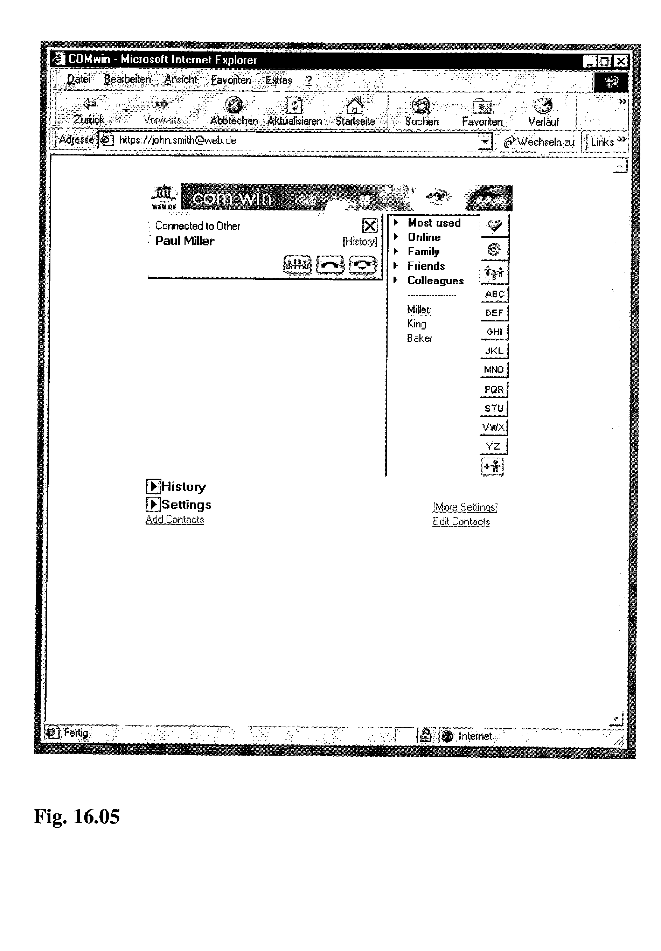

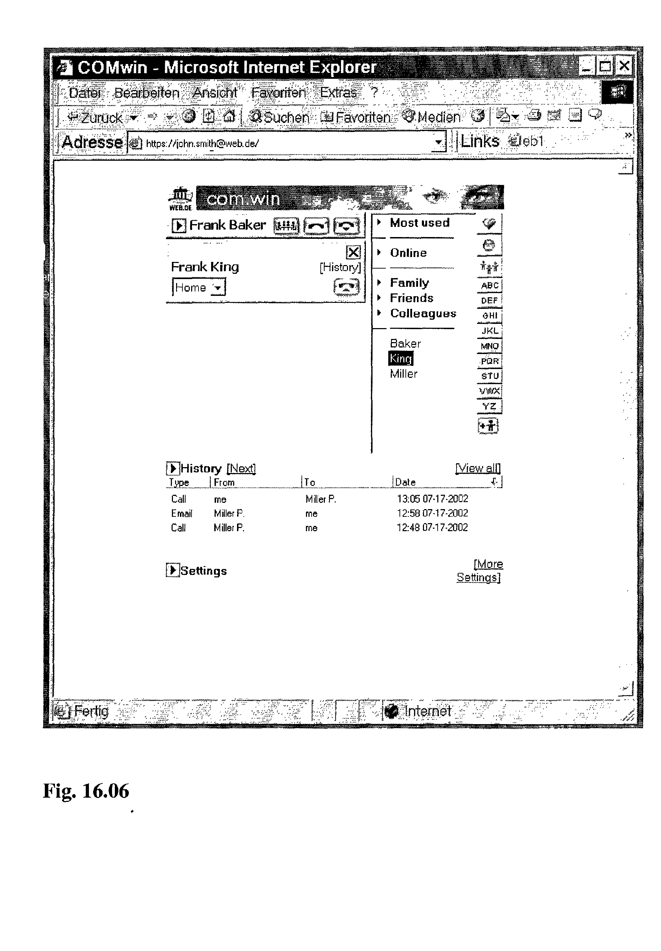

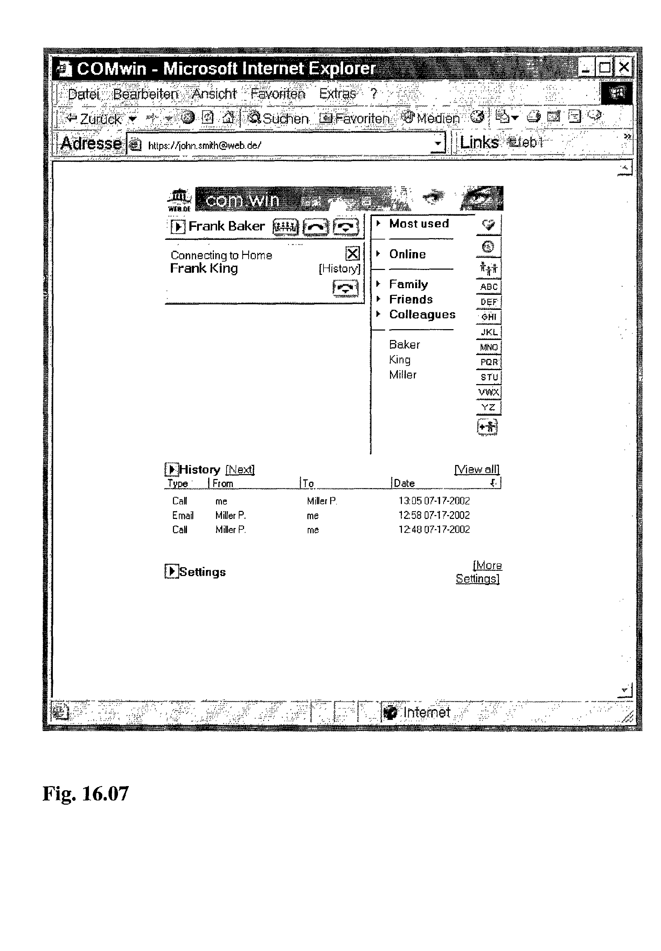

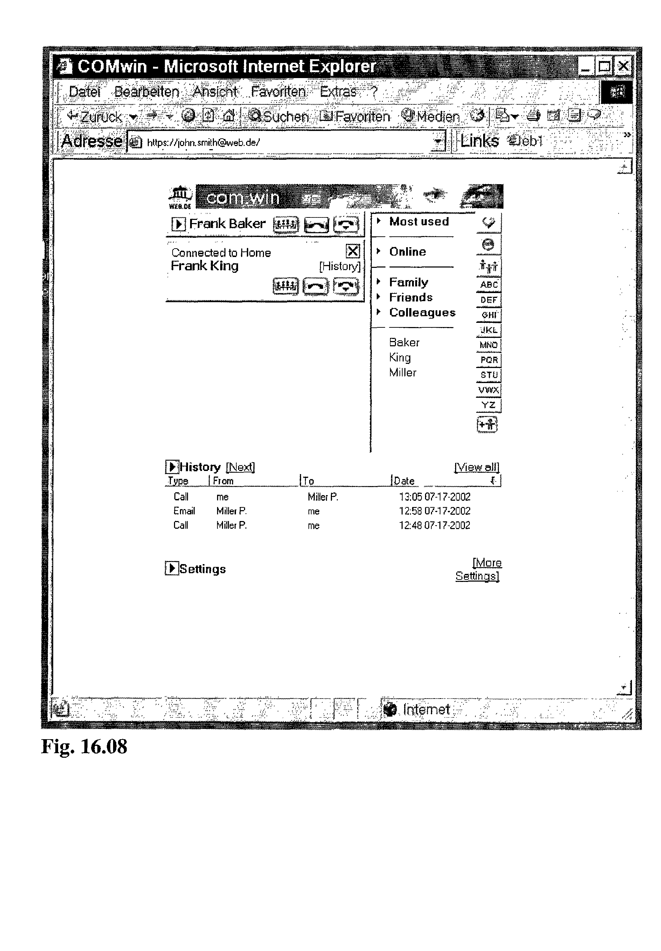

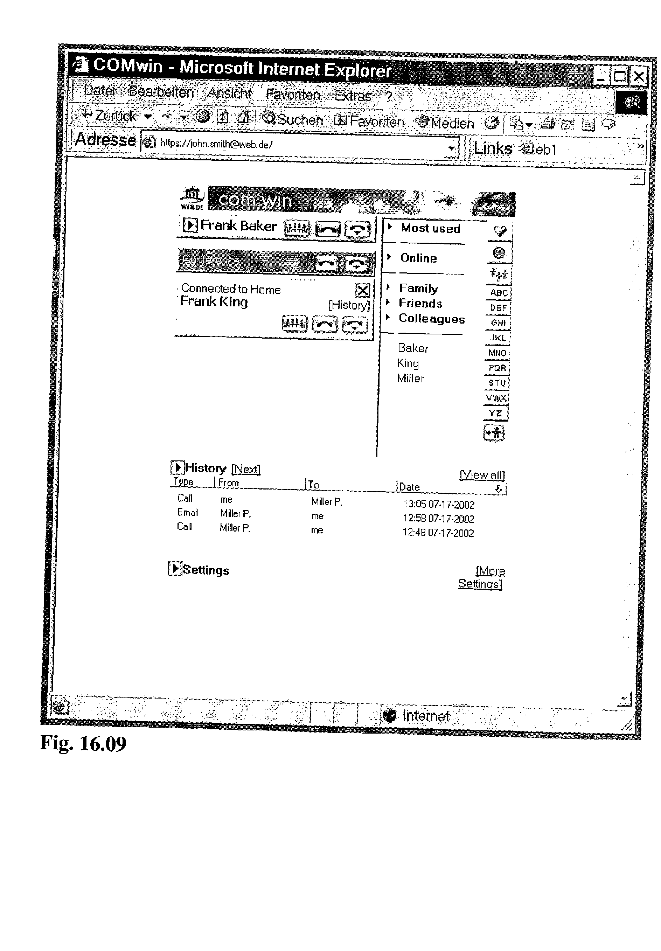

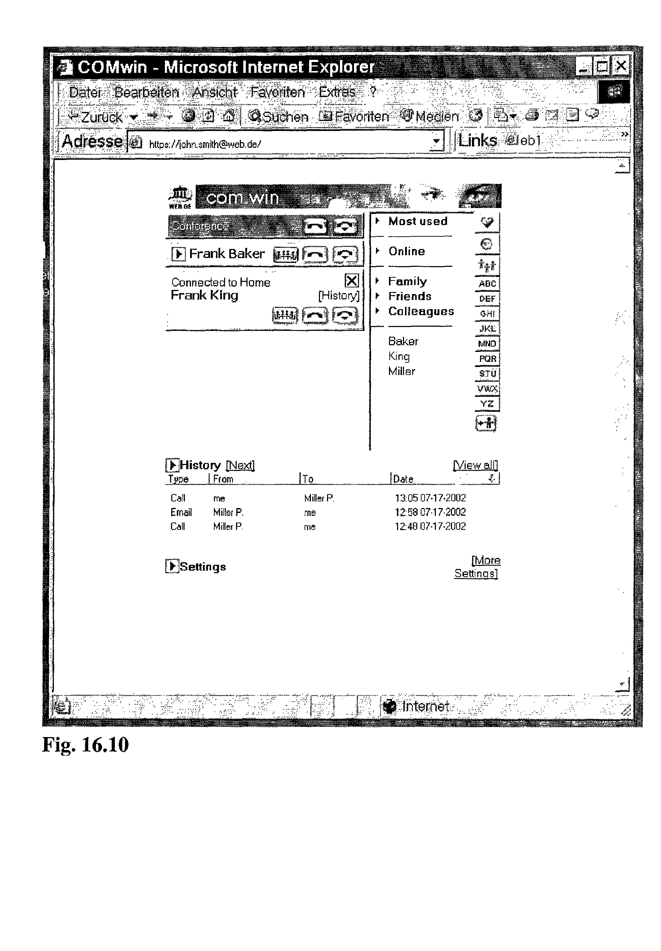

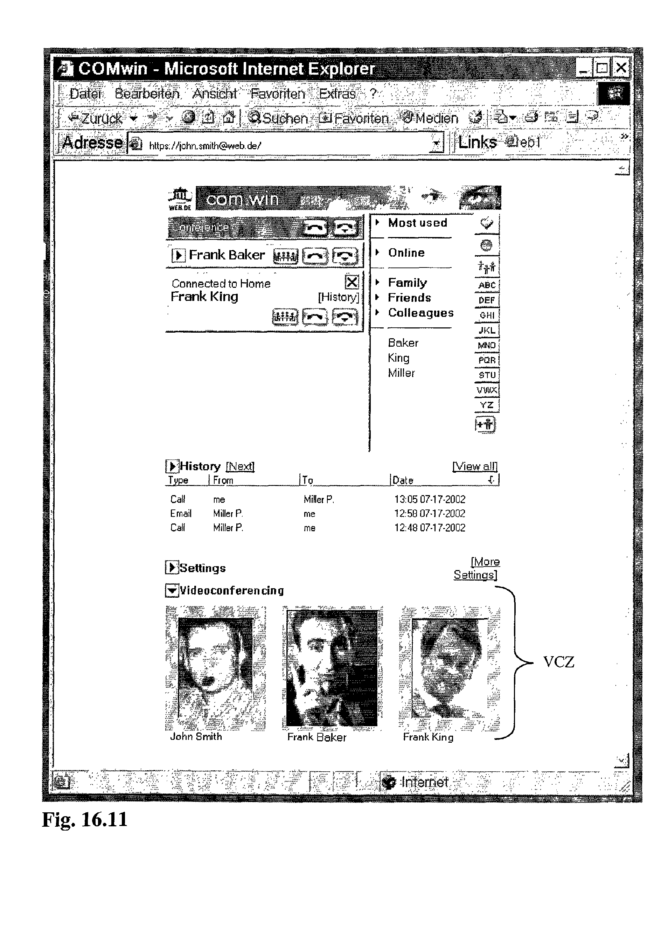

In figure 16.01 to 16.11, another layout of a web page of the telecommunications web site is illustrated. Herein, a zone layout of a web page is illustrated comprising a real-time zone RTZ, a controlling zone COZ and a settings zone SEZ. The telecommunications web site TCW is displayed in a browser like software. The user or host of the TCW , respectively, is John Smith. The unique address of John Smith is https://john.smith@web.de, displayed in the area "Adresse".

In the real-time zone RTZ, several sub-zones are displayed (see figures 16.09 to 16.11). In figure 16.01, the real time zone is empty - no external call is received, no person is to be contacted.

In the controlling zone COZ, two sub-zones are displayed. First, a sub-zone with the contacs is displayed on the right side of the telecommunications web site. Further, the history is displayed. At the moment, the history sub-zone is displayed in an abbreviated way. Thus, only the title of this sub-zone is displayed. Further, there is a button with an arrow. The funcionality of that button is to allow the user to see a detailed list of the history.

Such a detailed list is shown in the setting sub-zone of the setting zone SEZ. Here, the user may choose from different telephone numbers where he is reachable at the moment. With these settings, the user may allow for the telecommunications web site to redirect incoming calls to the preselected telephone numbers.

The host John Smith accessed his telecommunications web site TCW via the browser like software. The real time zone is empty, since John Smith is not presently connected to another party. In the controlling zone COZ, two names are displayed: "Miller" and "King". In the setting zone SEZ, the number of the office "0721/943298510" is preselected. At the bottom of the page, two buttons with specific functions are provided: "Add contact" and "Edit contact". With these buttons, it is possible to either add a new contact or person to the controlling zone COZ or to edit an already existing entry within the controlling zone.

John Smith now chooses to add a new contact and pushes the button "Add Contacts" with his mouse.

The result is displayed in **figure 16.02**. A new window opened with a layout that is adapted to allow for inputting the necessary data to define a specific person to be added to the contact list. John Smith typed the data into this layout by means of the keyboard connected to the computer on which the browser like software is running. In the end, John Smith confirms the entry by pushing the button "Save all". Thus, a new entry is added to the controlling zone COZ of the telecommunications web site. Further, John Smith actuates the button next to "Settings" and closes the sub-zone of the setting zone SEZ. Then, John Smith selects the Name "Miller" from the controlling zone COZ.

The result is illustrated in **figure 16.03.** In the real time zone RTZ, the information on Paul Miller is displayed, since "Miller" was selected in the controlling zone COZ. There is a button "other" with which a pull-down menu may be activated. Via this pull-down menu, John Smith may choose a telephone number to reach Paul Miller different from the default number. Further, there is a button "History". Pushing this button, John Smith may display all former contacts to "Paul Miller" in the sub-zone "History". In addition, there is a button provided with a pictogram of a receiver and an upwardly directed arrow. Behind this arrow is the functionality to establish a connection between the chosen office telephone number of John Smith ("0721/943298510") and the preselected telephone number of Paul Miller. This is the button, John Smith is hitting.

The result is illustrated in **figure 16.04**. Above the name "Paul Miller", the status of the connection to be established is displayed: "Connecting to Other". Thus, the telecommunications web site TCW establishes a call in a PSTN-network between both parties from telephone to telephone. None of the parties in the call to be established had to touch there end user units, i.e. telephones. The call is initiated by the telecommunications web site TCW. Now, the telephone of John Smith on his desk with the telephone number "0721/943298510" is ringing. John Smith picks up the phone and is connected to Paul Miller on the other side.

The display of the telecommunications web site, or the web page of the TCW, respectively, is shown in **figure 16.05.** The status shows "Connected to Other". Further, the web page changed its layout now displaying two more buttons: a conference button with a pictogram of people sitting at a meeting table and a second pictogram of a receiver without an arrow. On the right side, the known pictogram changed to a pictogram with the receiver and a downwardly directed arrow. Pushing this button would terminate the connection between John Smith and Paul Miller. John Smith chooses to push this button and to end the communication.

A new row of layouts of a web page of a telecommunications web site are illustrated in figures 16.06 to 16.11. In **figure 16.06**, John Smith is in connection with Frank Baker and talking to Frank Baker on the phone. In the controlling zone COZ, the sub zone "History" is displayed in a detailed manner. Herein, the former calls between Paul Miller and John Smith are listed. Further, John Smith chose "King" as an adress in the controlling zone COZ. Thus, "Frank King" is displayed in the real time zone RTZ with the known details. John Smith pushes the button with the pictogram of the receiver with the upwardly directed arrow. Thus, a connection is initiated to Frank King.

The result is shown in **figure 16.07**. The sub-zone of "Frank King" in the real time zone RTZ displayes the status "Connecting to home". The "Home" telephone number was chosen by John Smith to contact Frank King. The pictogram with the receiver and the arrow now displays an upwardly directed button. The functionality behind that button changed and is now adapted to terminate the connection between John Smith and Frank King upon request.

After a short while, John Smith is connected to Frank King. The result is shown in **figure 16.08**. Now, the status in the sub-zone of Frank King shows "Connected to Home". Now, John Smith chooses the button "conference" (the pictogram with the people sitting at a meeting table) in the sub-zone of Frank King.

As a result, a new sub-zone "Conference" is displayed in the real time zone RTZ. This new sub-zone is displayed between the sub-zone of Frank Baker (above) and Frank King (beneath). Only the parties displayed beneath this new sub-zone "Conference" are participants of this conference. Thus, the first step to establish a conference with John Smith, Frank King and another party is taken. However, Frank Baker is (not yet) a participant of this conference.

Now, John Smith activates the conference button in the sub-zone of Frank Baker. The result is shown in **figure 16.10.** The sub-zone of Frank Baker is now also displayed beneath the sub-zone "Conference". Thus, Frank Baker is now also a participant of the conference with John Smith and Frank King.

In **figure 16.11**, another zone is displayed beneath all other zones and that is the video conferencing zone VCZ. In this video conferencing zone VCZ, pictures of all participants are displayed. It is the host of the telecommunications web site John Smith, the participant Frank Baker and the participant Frank King. Frank Baker is speaking at the moment. Thus, the picture of Frank Baker is highlighted, i.e. enlarged. Thus, it is easy to follow the video conference since the participants can easily concentrate on the highlighted Frank Baker as the person contributing to the conference in this moment.

**Figure 17** shows the architecture of a communications environment 200 according to an embodiment of the present invention. Communications environment 200 includes telecommunications web site 250 and client 201, which communicate over matrix 203. Matrix 203 may be the Internet or an intranet, for example. Telephone 202 serves as an end user unit, communicating with telecommunications web site 250 over PSTN 204 to access phone subsystem 205. Telephone 202 may belong to the specific entity, i.e., the owner of telecommunications web site 250. Telephone 202 includes handset 261 which serves as an interface for user input and output, i.e., voice signals. Other telephones may serve as end user units for other called parties and/or users of telecommunications web site 250 and may likewise communicate over PSTN 204 and access phone subsystem 205. Network interface device 262 is also included in telephone 202 for interfacing with PSTN 204. In other embodiments of the present invention, other types of end user units which access telecommunications web site 250 over other types of networks or communications links may be provided.

Client 201 provides a user interface for a user accessing telecommunications web site 250. The user may be any authorized user of telecommunications web site 250, including the specific entity. Client 201 may reside on a computing device of a user, for example. More than one client 201 may be provided, each one corresponding to a given user. Client 201 includes CWSP listener module 261, HTML control module 262, and graphical user interface (GUI) 263. GUI 263 may be a browser-based graphical user interface including action buttons for clicking to perform actions. CWSP listener module 261 is a module which signalizes events (e.g., incoming call, new e-mail message, new fax, new visitor, etc.) to client 201. Signalling protocol CWSP is used for communication between CWSP listener module 261 and server 207 (described below) of telecommunications web site 250. Signalling protocol CWSP provides for encryption (TLS 1.0/SSL 3.0) of datagrams with asymmetric handshake and symmetric session encryption, with no need for certificates from client 201. Signalling protocol CWSP provides for signalling of the following:
- Login Handshake
- Signalling of Line States with unique LINE-Ids, including ringing and hanging up
- Initiate Line Actions, including call number and route incoming call to a number
- Client State, including represent the general state of the application and signalise the refresh of certain areas on the client
- Keep-Alive
- Logout
- Time-Sync
- Packet-Delay measurement to ensure fast data rate
- Presence Information of contacts (Logon/Logoff/Break/...).

HTML control module 262 controls specific areas of the user interface and loads HTML pages into any controlled area on request by CWSP listener module 261. HTML control module 262 communicates with webserver 210 (described below) of telecommunications web site 250. To ensure privacy of the communications between HTML control module 262 and webserver 210, HTML control module 262 uses the protocol Hypertext Transfer Protocol over TLS (HTTPS), which is described in E. Rescorla, Memo, Network Working Group , "HTTPS Over TLS", The Internet Society, 2000, which is hereby incorporated by reference herein.

Telecommunications web site 250 may include a variety of components: phone subsystem 205, user manager 206, real time server 207, user profile data base 208, web server 210, connection manager 211, core engine 212, presence manager 213, account manager 217, contact manager 218, log manager 219, and session manager 224. Some or all of the components of telecommunications web site 250 may be software components running on any of a variety of operating systems, such as any flavour of UNIX (BSD, Solaris, HP-UX,...), Linux, Apple Macintosh or even any Microsoft operating system (DOS, Windows 95,98,NT,XP,ME), and any real-time operating system (e.g. QNX, RTOS, EUROS,...), for example. Some or all of the components of telecommunications web site 250 may run on any of a variety of known or future computer hardware (e.g. Intel, AMD, HP, Sun, Motorola, IBM...). Some or all of the components of telecommunications web site 250 may be written in any of a variety of programming language, preferably any higher programming language such as C, Fortran, Basic, Pascal, Lisp, etc., or any higher object oriented programming language such as C++, Java, Python, etc., or any script language like Perl, PHP, etc., for example. Some or all of the components of telecommunications web site 250 may reside on the same hardware and may communicate via any suitable interprocess communication method provided by the operating system.

When any of the components of telecommunications web site 250 communicates with any other component not residing on the same hardware, the relevant components may use any of a variety of network communication protocols, such as, for example, Common Object Request Broker Architecture (CORBA), Remote Procedure Calls (RPC), Simple Object Access Protocol (SOAP), RPC via SOAP, HTTP, FTP, etc. Communication between components of telecommunications web site 250 may be established via mounting of file systems and exchange of files. Some or all of the components of telecommunications web site 250 may exist in parallel multiple times so as to provide a scalable system for many, even several million users or more. In some embodiments of the present invention, several instances of the same component may be distributed on several different hardware devices. Hardware links between different hardware devices may be any of a variety of communications links, such as Ethernet, for example, or other network types, using any of a variety of interfaces, such as serial, parallel, etc.

Data base components, such as user profile data base 208, contact data base 210 (discussed below), accounting data base 220 (discussed below), log data base 222 (discussed below), and user data base 223 (discussed below), may be any of a variety of relational data bases, such as ORACLE, mySQL, etc., or object oriented data bases, such as 'Fast Objects' , any OQL data base, XML Data bases like dbXML, Tamino, X-Hive/DB, etc.

Phone subsystem 205 incorporates one or more private branch exchanges (PBX) 209. PBX 209 may include, for example, the Net@tec Phone Subsystem with NMS hardware, made by Net@tec. Phone subsystem 205, using PBX 209, provides the following functionality:
- Signalling of incoming calls
- Signalling of Phone Events (e.g. Ringing, Hanging up, Connecting)
- Signalling of DTFM
- Creation of new Line Handles
- Connection of 2 or more Line Handles for conferencing
- Forwarding of incoming calls

User manager 206 receives login and password information and returns the corresponding user identification number if the combination is correct. User manager 206 communicates with user data base 223 to check the login and password information and to locate the correct user identification number. User data base 223 stores central user data, such as login, password and address information, for each user.

Real time server 207 may perform the following functions
- Sends all signals representing the current state of the system via signalling protocol CWSP to client 201.
- Uses session manager 224 to share a session with web server 210. This ensures that the right combination of information is sent from real time server 207 and web server 210 to client 201. This ensures that no other user is able to access data of any other user.
- Uses user profile data base 208 to check the authorization level of a user. This is required because different users may have different contracts enabling them to use a different set of features of telecommunications web site 250.
- Uses connection manager 224 to keep track of the lines and logins of a given user. In this context, a line is a connection between the phone subsystem 205 and any phone. At any time the connection manager will know which lines on which PBX 209 and which logons on which instances of real time server 207 belong to a given user.
- Uses presence manager 213 to keep track of the presence condition of any user.
- Signalizes events to core engine 212 (e.g., the "call telephone number 00497219432940 button" was pressed on client 201), and receives information about the current state of the system from the core engine.

User profile data base 208 holds user profiles containing information about the contract type, the user's phones, personal settings and personal rules, invoices, permissions and the personal state graphs which describe the behaviour of the system at any given time.

Web server 210 provides all information displayed on client 201 which is not being transported by signalling protocol CWSP. Web server 210 may provide the following functions:
- Creates a Client Home Page with the personal greeting text, which is displayed using client 201.
- Receives personal text messages from visitors of telecommunications web site 250 and organizes delivery of these messages to the owner of telecommunications web site 250, i.e., the specific entity.
- Talks to user profile data base 208 to display or to set the personal settings and personal texts.
- Uses log manager 219 to create individual pages of personal log data, wherein the log data is a record of all communication (incoming and outgoing) via the TCW. Pages are subsets of this record (e.g. all emails, all communication to a specific contact) sorted by any criteria (date, subject, etc.). The contact manger 216 is used to create individual lists of contacts and to store new contacts created on client 201.

Connection manager 211 enables the ability to get a connection between logons and current ongoing calls for a given user at a given time. There are several ways for the user to get into contact with the TCW (see above). One of those ways is using the client on e.g. a PC. To authorize his access one has to type in the username and password and he is then granted access to the TCW with certain privileges. This is called "logon". One could be logged on from different systems at the same time. So if, for instance, a phone call comes in to his TCW phone number the Connection manager 211 is the central place in the system where the core engine 212 can look up if and from which system with which address(es) the owner of the TCW is logged on. This capability is advantageous for visualizing, on client 201, the current state of the TCW. The system is preferably the whole TCW. The state is a summary of all known facts about the TCW. Here this especially means facts like: "The user is logged on from IP Address 63.17.24.122." and "Is currently speaking from EUU2 (phone# +49-721-987654) to EUU1 (phone# +49-721-123456)" Connection manager 211 may provide the following functionality:
- Holds accounts of all logons and the associated real time servers. In order to get just one working TCW one needs all components only once. But if one wants a scaleable system capable of dealing with millions of users it is preferred to build a system where some components are installed several times. In fact all components can be installed several time except for the Connection manager 211. But this restriction is only academic, as the amount of data held by the Connection manager is small and easily controllable.
- Holds accounts of all ongoing calls and associated core engines.
- It provides functions to find all real time server sessions and all core engines belonging to a specific entity.

Core engine 212 is the central component of telecommunications web site 250 which controls the current states of the telecommunications web site, and includes state manager 214, state engine 215 and rule engine 216. Core engine 212 may provide the following functions:
- Uses several state managers 214 to communicate with user manager 206, real time server 207, user profile data base 208, PBX 209, connection manager 211, presence manager 213, account manager 217, contact manager 218, and log manager 219.
- Uses real time server 207 to signalize events and the current state of the system to client 201; and receives events from real time server 207.
- Uses user profile data base 208 to authorize calls and to retrieve user profile data for, for example, call forwarding functionality, time based change of profiles, checking of permissions, etc.
- Uses phone subsystem 205 to initiate calls and conferences; and receives signals from phone subsystem 205 about incoming calls, hangups, DTFMs, etc.
- Uses connection manager 211 to store information about current calls and to determine the respective real time server 207 instance to signal the state of each current call to.
- Uses presence manager 213 to store current presence information for each user.
- Uses accounting manager 217 to write call data records for accounting.
- Uses contact manager 218 to identify calling numbers as known contacts. Depending on this identification the forwarding might be different. The Specific entity can, for instance, set profiles defining that a call from user A should always be forwarded to the secretary, while a call from user B should be forwarded to his mobile phone, if the call is within normal business hours. So the reaction of the system might be different.
- Uses log manager 219 to write personal log records of calls.

Presence manager 213 is responsible for tracking the current presence status (offline, online, reachable, in break, in conference, etc.) of users. Presence manager 213 may provide the following functionality:
- Stores current presence information as set by real time server 207 and core engine 212.
- Delivers the current presence information to real time server 207 and core engine 212.

State manager 214 of core engine 212 serves as the communicating part of core engine 212. In an embodiment of the present invention, state manager 214 may serve as a Corba client and/or Corba server for real time server 207, user profile data base 208, PBX 209, connection manager 211, presence manager 213, account manager 217, contact manager 218, and log manager 219. State manager 214 may provide the following functionality:
- Represents the current state of the system for real time server 207, user profile data base 208, PBX 209, connection manager 211, presence manager 213, account manager 217, contact manager 218, and log manager 219.
- Passes necessary information to state engine 215. For example, loads a user state graph from profile data base 208 and passes the graph onto state engine 215.
- Receives information from state engine 215 and initiates the appropriate calls of functions of real time server 207, user profile data base 208, connection manager 211, presence manager 213, account manager 217, contact manager 218, and log manager 219.

State engine 215 uses the user state graph from user profile data base 208 to move from one state to another; and executes the defined rules and triggers the appropriate actions via state manager 214. State engine 215 may use rule engine 216 to evaluate rules defined by the user, which are relevant to the current state. This evaluation process results in the next move by state engine 215 on the user state graph.
- Rule engine 216 provides evaluation of user defined rules stored in user profile data base 208. These rules provide actions associated with respective conditions. The Specific entity can, for instance, set profiles defining that a call from user A should always be forwarded to the secretary, while a call from user B should be forwarded to his mobile phone, if the call is within normal business hours. So the reaction of the system might be different. Here the actions would be "forwarding to secretary", "forwarding to mobile phone".

Accounting manager 217 receives call data records from state manager 214 which were created in state engine 215. These call data records are then written into accounting data base 220 for future processing.

Contact manager 218 stores user contact data in contact data base 221. Contact manager 218 serves as an interface for storage and retrieval by web server 210, and retrieval by core engine 212, of contact data.

Log manager 219 handles user log data. User log data are accounts of all communication of a special User. E.g. "3.3.2002 17:01 Call from Frank - Duration 1:23", "3.3.2002 17:15 Email to Frank - Size 69.345 Bytes". User log data are stored in log data base 222. Log manager 219 may provide the following functionality:
- Receives log data from core engine 212.
- Answers requests for user log data from web server 210, returning the data in specifically filtered or sorted formats. An example of such a user log data request is a request for all calls from a special user within the last 2 months.
- Allows certain requests from web server 210 to delete specific log data.
- Allows certain requests from web server 210 to add documents to specific log data entries. Examples of such documents include a note about a given phone call, documents exchanged during a given phone call, etc.

Session manager 224 creates and stores a record of each user session. Session manager 224 may provide the following functionality:
- Upon login via real time server 207 or via web server 210, creates a session and an associated unique session token. Since messages from client 201 to real time server 207 and web server 210 need a valid session token in order to be executed, real time server 207 and web server 210 check each request for the session token and request validation from session server 207.
- Deletes a session after a defined time of inactivity.

The functioning of will now be demonstrated by way of examples.

### Example 1

Figs. 2a and 17 may be used to demonstrate initiation of a call to a desired called party, say user 1 of end user unit EUU1, by specific entity SE, the owner of telecommunications web site 250 using client 201 to prompt the web site to establish respective connections between PBX 209 and each party over the PSTN. Here, telecommunications web site TCW and connections means CM in Fig. 2a correspond to telecommunications web site 250 and phone subsystem 205, respectively, in Fig. 17. Assumed initiate state of communications environment 200 is as follows: No ongoing calls; no precall. (a "precall" is, for instance, a call from a EUU of the SE to the TCW where the TCW does not yet know where to forward this call to. The SE might now decide to click on a client to choose a calling destination), specific entity SE is logged on to telecommunications web site 250 with client 201. The chain of events in communications environment 200 is as follows:
1. Specific entity SE first selects the desired called party, user 1 of end user unit EUU1, and clicks on a "connect" button (not shown) of client 201.
2. Client 201 sends a connect message via using CWSP Listener 261 via the CWSP protocol to real time server 207.
3. Real time server 207 sends an "event" (events in this context are e.g. "SE just logged on", "SE logged off", "SE clicked on Button xyz on the client", "SE wants to call #xx.xx.xx.xx",... so in short any situation which might change the state of the system) to core engine 212.
4. Core engine 212 loads state engine 215 with the appropriate state graph and sends a signal "connect to phone number x (of specific entity SE)" to PBX 209.
5. PBX 209 connects over PSTN 204 to telephone 202 belonging to specific entity SE. The telephone rings.
6. Specific entity SE answers.
7. PBX 209 signals the successful connection to core engine 212.
8. Core engine 212 sends a signal "forward this call of specific entity SE to phone number y (of the user 1 to be called)" to PBX 209.
9. PBX 209 connects over PSTN 204 to end user unit EUU1, here the telephone of user 1 (not shown). The telephone rings.
10. User 1 answers his telephone.
11. PBX 209 sends a signal "connected number x to number y" to core engine 212.
12. Core engine 212 starts an internal call timer (not shown) to keep track of the call time.
13. The telephone call is carried on.
14. One of the parties (specific entity SE or user 1) hangs up.
15. PBX 209 receives a "hang up" signal from PSTN 204 and hangs up the connection to the other party.
16. PBX 209 signals the end of the call to core engine 212.
17. Core engine 212 stops the internal call timer, writes an appropriate log entry to the log manager 219 and a call data record to accounting manager 217.
18. Core engine 212 sends a signal "hang up" to real time server 207.
19. Real time server 207 sends a signal "hang up" via protocol CWSP to client 201.

### Example 2

Figs. 2b and 17 may be used to demonstrate initiation of a call user 1 of end user unit EUU1 by specific entity SE by calling in to telecommunications web site 250 using telephone 202. Again, telecommunications web site TCW and connections means CM in Fig. 2a correspond to telecommunications web site 250 and phone subsystem 205, respectively, in Fig. 17. Assumed initiate state of communications environment 200 is as follows: No ongoing calls; no precall, specific entity SE is logged on to with client 201. The chain of events in communications environment 200 is as follows:
1. Specific entity SE takes telephone 202 off hook and dials a personal assigned telephone number to telecommunications web site 250.
2. PBX 209 signals the incoming call from specific entity SE to core engine 212.
3. Core engine 212 loads state engine 212 with the appropriate state graph and waits for any signal.
4. Specific entity SE selects the desired called party, user 1 of end user unit EUU1, and clicks on a "connect" button (not shown) of client 201.
5. Client 201 sends a connect message using CWSP listener 261 via protocol CWSP to real time server 207.
6. Real time server 207 sends the event to core engine 212.
7. Core engine 212 sends a signal "forward this call of specific entity SE to phone number y (of user 1) to PBX 209.

### (actions now follow as in steps 9-19 of Example 1 above)

### Example 3

Figs. 2c and 17 may be used to demonstrate initiation of a call by user 1 of EUU1 by calling in to telecommunications web site 250 using end user unit EUU1, a telephone of user 1 (not shown). Again, telecommunications web site TCW and connections means CM in Fig. 2a correspond to telecommunications web site 250 and phone subsystem 205, respectively, in Fig. 17. Assumed initiate state of communications environment 200 is as follows: No ongoing calls; no precall.
1. User 1 dials the personal assigned phone number on telecommunications web site 250 of specific entity SE using end user unit EUU1.
2. PBX 209 signals the incoming call to core engine 212.
3. Core engine 212 loads state engine 215 with the appropriate state graph and uses rule engine 216 to evaluate the current rules. This evaluation yields the number of the current device on which specific entity SE is currently reachable.
4. Core engine 212 send a signal to "forward this call to the phone number x (of specific entity SE)" to PBX 209.
5. PBX 209 connects end user unit EUU1 to telephone 202 of specific entity SE.
6. The preferred telephone device (telephone 202) of specific entity SE rings.
7. Specific entity SE answers telephone .

### (actions now follow as in steps 11-19 of Example 1 above)

### Example 4

Figs. 2d and 17 may be used to demonstrate conference calling between specific entity SE, end user unit EUU1 and end user unit EUU2 of a second end user 2, as well as toggeling by specific entity SE between end user units EUU1 and EUU2. Again, telecommunications web site TCW and connections means CM in Fig. 2a correspond to telecommunications web site 250 and phone subsystem 205, respectively, in Fig. 17. Assumed initiate state of communications environment 200 is as follows: an ongoing call between specific entity SE and end user unit EUU1 of user 1, which ongoing call may have been established as in Examples 1, 2 or 3 above.
1. User 2 dials the personal assigned phone number on telecommunications web site 250 of specific entity SE using end user unit EUU2.
2. PBX 209 signals the incoming call to core engine 212.
3. Core engine 212 sends a signal "incoming call from phone number z (of user 2)" to real time server 207.
4. Real time server 207 sends a signal "incoming call from phone number z (of user 2)" via protocol CWSP to CWSP listener of client 201.
5. The of specific entity SE indicates the incoming call.
6. Specific entity SE clicks on an appropriate button on GUI 263 of client to toggle between the call with user 1 and the call with user 2.
7. Client 201 sends a signal "toggle calls" via CWSP listener using protocol CWSP to real time server 207.
8. Real time server 207 sends a signal "toggle calls" to core engine 212.
9. Core engine 212 sends a signal "put call from user 1 on hold" to PBX 209.
10. PBX 209 puts the call with user 1 on hold and signals the successful action to core engine 212.
11. Core engine 212 sends a signal "connect specific entity SE to EUU2" to PBX 209.
12. PBX 209 signals the successful connection to core engine 212.
13. Specific entity SE and user 2 talk together.
14. Specific entity SE decides to initiate a conference call with users 1 and 2. Specific entity SE clicks on an appropriate conference button on GUI 263 of client 201 for the "on hold" connection to user 1.
15. Client 201 signalises "initiate conference" via CWSP listener 261 using protocol CWSP to real time server 207.
16. Real time server 207 signalises "initiate conference" to core engine 212.
17. Core engine 212 signalises "add connection to user 1 to the ongoing call between user 2 and specific entity SE" to PBX 209.
18. PBX 209 connects user 1, user 2 and specific entity SE and signals success to core engine 212.
19. User 1, user 2 and specific entity SE talk together in a conference.
20. Core engine 212 signals the successful conference to real time server 207.
21. Real time server 207 signals the conference to CWSP listener of client 201via protocol CWSP.
22. Client 201 provides an indication of the conference on GUI 263.
23. Specific entity SE decides to finish the conference and clicks on a "hang up" button on GUI 263.
24. Client 201 signalises "hang up" to real time server 207.
25. Real time server 207 signalises "hang up" to core engine 212.
26. Core engine 212 signalises "hang up" to PBX 209.
27. PBX 209 hangs up all 3 connections.

### (actions now follow as in steps 16-19 of Example 1 above)

### Example 5

Figs. 7b and 17 may be used to demonstrate the interaction between two owners (specific entities) of respective telecommunications web sites communicate with each other. Telecommunications web site TCW1 corresponds to specific entity SE1, which uses end user unit EUU1, while telecommunications web site TCW2 corresponds to specific entity SE2, which uses end user unit EUU2.

Communications over connections A and B (Fig. 7b) may be established between end user unit EUU1 and end user unit EUU2 as in Example 3 above. Additionally, because the two web sites are connected to each other, telecommunications web site TCW2 recognizes the calling party, SE1, as the owner of telecommunications web site TCW1. Web server 210 of telecommunications web site TCW2 therefore connects as a client to web server 210 of telecommunications web site TCW1 and exchange user profiles and information about available end devices of end user unit EUU1. Telecommunications web site TCW1 may then establish a second connection between an end device of end user unit EUU1 and an end device of end user unit EUU2 as in Example 3 above. This second connection may be a connection providing higher quality communications than the communications over than the connection (Fig. 7b). The connection over A and B may then be, for example, terminated.

In the above examples, where gateway G1 and/or G2 is used between connection means CM and an end user unit EUU1 and/or EUU2 (see Fig. 5a), the functioning of telecommunications web site 250 is as described above except that phone subsystem 205 is replaced or supplemented by a special IP switch. This IP switch acts as terminating device for TCP/IP connections to a gateway. The IP switch can also connect two TCP/IP connections from the switch to any gateway in order to enable gateway-to-gateway communication, and can therefore establish a connection between two different types of communication networks, such as PSTN, UMTS, etc.

In the preceding specification, the present invention has been described with reference to specific exemplary embodiments thereof. It will, however, be evident that various modifications and changes may be made thereto without departing from the broader spirit and scope of the invention as set forth in the claims that follow. The specification and drawings are accordingly to be regarded in an illustrative manner rather than a restrictive sense.
- **CE**: **connection element**
- **COZ**: **a controlling zone**
- **CRE**: **caller recognition element**
- **ECE**: **event creating element**
- **EIE**: **event identifying element**
- **EUU**: **end user unit**
- **IAZ**: **an interactive zone**
- **IDB**: **individual data base (personal data, black lists, groups, etc.)**
- **IES**: **individual event settings element**
- **IPD**: **individual protocol data base (history data)**
- **MT**: **mobile telephone**
- **NET**: **network**
- **PDZ**: **a personal data zone**
- **PEC**: **portal events & calls**
- **PHZ**: **a personal homepage zone**
- **PPZ**: **a personal portal zone**
- **PSTN**: **public switching telephone network**
- **RTZ**: **a real-time zone**
- **SE**: **specific entity (host of the TCW)**
- **SEZ**: **a settings zone**
- **SIZ**: **a signalling zone**
- **ST**: **stationary telephone**
- **TCP**: **telecommunications portal**
- **TCW**: **telecommunications web site**
- **VCZ**: **a video conferencing zone**

## Claims

1. A telecommunications web site (TCW)
**characterized in that**
the telecommunications web site (TCW) has an event creating element (ECE).

2. A telecommunications web site (TCW) according to claim 1
**characterized in that**
event creating element (ECE) is adapted to create an event of the group of a modification of the layout of the web page of the telecommunications web site (TCW) presented to the caller or the specific entity, retrieval information, the presentation of a predefined functionality, sending information to a user/ signalling, queries to the caller to identify the caller, internal/ external feedback, notification, authorization, especially authorization to download data, starting a specific computer software or a combination thereof.

3. A telecommunications web site (TCW) according to any of claims 1 or 2
**characterized in that**
the telecommunications web site (TCW) has an event identifying element (EIE).

4. A communications environment, comprising at least one telecommunications web site (TCW) according to one of the preceding claims directed to a telecommunications web site (TCW).

5. A communications environment according to claim 4, comprising at least one telecommunications web site (TCW) on a telecommunications portal (TCP).

6. A method to create an event via a telecommunications web site (TCW) comprising the steps of:
identifying an incoming event;
creating an outgoing event; and
establishing the communication in a manner depending from the kind of the identified event.

7. A computer program product, including
program code portions for carrying out the steps according to claim 6.
